(19) **Europäisches Patentamt / European Patent Office / Office européen des brevets**

(11) **EP 4 538 894 A1**

(12) **EUROPEAN PATENT APPLICATION**
published in accordance with Art. 153(4) EPC

(43) Date of publication:
**16.04.2025 Bulletin 2025/16**

(21) Application number: **23830340.8**

(22) Date of filing: **28.06.2023**

(51) International Patent Classification (IPC):
**G06F 11/34** (2006.01)    **G06N 3/04** (2023.01)
**G06N 3/08** (2023.01)    **G06N 20/00** (2019.01)

(86) International application number:
**PCT/CN2023/103227**

(87) International publication number:
**WO 2024/002167 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022  CN 202210759871**

(71) Applicant: **Huawei Technologies Co., Ltd.**
**Shenzhen, Guangdong 518129 (CN)**

(72) Inventors:
• **WANG, Yichao**
  **Shenzhen, Guangdong 518129 (CN)**
• **GUO, Huifeng**
  **Shenzhen, Guangdong 518129 (CN)**
• **DONG, Zhenhua**
  **Shenzhen, Guangdong 518129 (CN)**
• **TANG, Ruiming**
  **Shenzhen, Guangdong 518129 (CN)**

(74) Representative: **Körber, Martin Hans et al**
**Mitscherlich PartmbB**
**Patent- und Rechtsanwälte**
**Karlstraße 7**
**80333 München (DE)**

(54) **OPERATION PREDICTION METHOD AND RELATED APPARATUS**

(57)    An operation prediction method is provided. The method includes: obtaining a first embedding representation and a second embedding representation of attribute information of a user and an item respectively by using a first feature extraction network and a second feature extraction network, where the first embedding representation indicates a feature unrelated to recommendation scenario information, the second embedding representation indicates a feature related to a target recommendation scenario, and the first embedding representation and the second embedding representation are used for fusion to obtain a fused embedding representation; and predicting target operation information of the user for the item based on the fused embedding representation.

```
┌──────────────────────────────────────────────────────────┐
│ Obtain attribute information of a user and an item in a   │── 501
│ target recommendation scenario                            │
└──────────────────────────────────────────────────────────┘
                            │
                            ▼
┌──────────────────────────────────────────────────────────┐
│ Obtain a first embedding representation and a second      │
│ embedding representation respectively by using a first    │
│ feature extraction network and a second feature           │
│ extraction network based on the attribute information,    │
│ where the first embedding representation indicates a      │── 502
│ feature unrelated to recommendation scenario information, │
│ the second embedding representation indicates a feature   │
│ related to the target recommendation scenario, and the    │
│ first embedding representation and the second embedding   │
│ representation are used for fusion to obtain a fused       │
│ embedding representation                                  │
└──────────────────────────────────────────────────────────┘
                            │
                            ▼
┌──────────────────────────────────────────────────────────┐
│ Predict target operation information of the user for the  │── 503
│ item based on the fused embedding representation          │
└──────────────────────────────────────────────────────────┘
```

FIG. 5

## Description

This application claims priority to Chinese Patent Application No. 202210759871.6, filed with the China National Intellectual Property Administration on June 30, 2022 and entitled "OPERATION PREDICTION METHOD AND RELATED APPARATUS ", which is incorporated herein by reference in its entirety.

## TECHNICAL FIELD

This application relates to the field of artificial intelligence, and in particular, to an operation prediction method and a related apparatus.

## BACKGROUND

Artificial intelligence (artificial intelligence, AI) refers to a theory, a method, a technology, and an application system that are used to simulate, extend, and expand human intelligence by using a digital computer or a machine controlled by the digital computer, to perceive an environment, obtain knowledge, and obtain an optimal result by using the knowledge. In other words, artificial intelligence is a branch of computer science and attempts to understand essence of intelligence and produce a new intelligent machine that can react in a similar manner to human intelligence. Artificial intelligence is to research design principles and implementation methods of various intelligent machines, so that the machines have perception, inference, and decision-making functions.

Selection rate prediction (or referred to as click-through rate prediction) is to predict a probability that a user selects an item in a specific environment. For example, in a recommendation system of an application like an application store or online advertising, selection rate prediction plays a key role. The selection rate prediction can maximize benefits of an enterprise and improve user satisfaction. The recommendation system needs to consider both a rate of selecting an item by a user and an item price. The selection rate is predicted by the recommendation system based on a historical behavior of the user, and the item price represents benefits of the system that are obtained after the item is selected/-downloaded. For example, a function may be constructed, the function may be used to calculate function values based on predicted user selection rates and item prices, and the recommendation system sorts items in descending order of the function values.

To meet personalized requirements of users, the recommendation system includes a plurality of recommendation scenarios, such as a browser, a leftmost screen, and a video stream. The user behaves differently based on preferences in different scenarios. Each scenario has a user-specific behavior feature. Generally, each scenario is independently modeled. Because a same user behaves differently in different scenarios, independent modeling for a single scenario cannot effectively capture behavior features of the user in different scenarios. In addition, when there are many scenarios, independent modeling and maintenance for each scenario is labor-intensive and resource-consuming. If features in a plurality of scenarios are extracted by using one feature extraction network, because features in different scenarios are different, the network cannot learn a common behavior feature, and consequently prediction precision of operation information is poor.

## SUMMARY

In this application, a common feature (that is, a scenario-unrelated feature) in different scenarios may be extracted by using a first feature extraction network, and operation information is predicted based on a result of fusion of the feature and a scenario-related feature. This can improve prediction precision of the operation information.

According to a first aspect, this application provides an operation prediction method. The method includes: obtaining attribute information of a user and an item in a target recommendation scenario; obtaining a first embedding representation and a second embedding representation respectively by using a first feature extraction network and a second feature extraction network based on the attribute information, where the first embedding representation indicates a feature unrelated to recommendation scenario information, the second embedding representation indicates a feature related to the target recommendation scenario, and the first embedding representation and the second embedding representation are used for fusion to obtain a fused embedding representation (for example, a fusion manner like matrix multiplication may be performed); and predicting target operation information of the user for the item based on the fused embedding representation.

The first feature extraction network is used to extract the feature unrelated to the recommendation scenario information, that is, an invariant feature representation (invariant representation) of each scenario. The feature and a feature related to the recommendation scenario information (which may be referred to as a variant representation (scenario representation) in embodiments of this application) are fused, to indicate that each scenario has a user-specific behavior feature, or indicate a user-specific behavior feature between different scenarios. This improves prediction precision of subsequent operation information prediction.

In a possible implementation, the attribute information includes operation data of the user in the target recommendation scenario, and the operation data further includes first operation information of the user for the item; and the method further includes: predicting second operation information of the user for the item by using a first neural network based on the attribute information; predicting a first recommendation scenario of the operation data by using a second neural network based on the attribute information, where a difference between the first operation information and the second operation information and a difference between the first recommendation scenario and the target recommendation scenario are used to determine a first loss; performing, based on the first loss, orthogonalization processing on a gradient corresponding to a third feature extraction network in the first neural network and a gradient corresponding to a fourth feature extraction network in the second neural network, to obtain a first gradient corresponding to an initial feature extraction network; and updating the third feature extraction network based on the first gradient, to obtain the first feature extraction network.

An idea of embodiments of this application is as follows: The third feature extraction network is trained, so that the trained third feature extraction network can identify the invariant feature representation (invariant representation) shared in each scenario. In embodiments of this application, the second neural network is disposed. Because the second neural network is used to identify a recommendation scenario of operation data, an embedding representation obtained by using the fourth feature extraction network in the second neural network can carry semantic information strongly related to the recommendation scenario, and this part of semantic information strongly related to the recommendation scenario does not need to be carried in the invariant feature representation. Therefore, to enable the third feature extraction network to have a capability of identifying an embedding representation having no semantic information (which may be referred to as a variant representation (scenario representation) in embodiments of this application) strongly related to the recommendation scenario, in embodiments of this application, when gradients used to update the third feature extraction network and the fourth feature extraction network are determined, orthogonalization processing is performed on the gradients corresponding to the third feature extraction network and the fourth feature extraction network. Orthogonalization processing can constrain directions of gradients (that is, parameter update directions) corresponding to the third feature extraction network and the fourth feature extraction network to be mutually orthogonal or nearly mutually orthogonal. In this way, embedding representations extracted by the third feature extraction network and the fourth feature extraction network can have different information, and embedding representation separation is implemented. Because the second neural network has a good recommendation scenario distinguishing capability for operation data, the embedding representation extracted by the updated fourth feature extraction network has semantic information strongly related to the recommendation scenario, the first neural network is used to identify operation information, and the trained first neural network has a good capability of estimating an operation behavior of the user. Therefore, the trained third feature extraction network can have a capability of identifying information (that is, boundary of the information) used for operation information identification, and the information does not have the semantic information strongly related to the recommendation scenario. This improves generalization of a recommendation model in each scenario.

In a possible implementation, a neural network may be additionally deployed, to perform orthogonalization processing on the gradient corresponding to the third feature extraction network and the gradient corresponding to the fourth feature extraction network.

In a possible implementation, a constraint term may be added to the first loss, and the constraint term is used to perform orthogonalization constraint on the gradient corresponding to the third feature extraction network and the gradient corresponding to the fourth feature extraction network.

In a possible implementation, after the gradient corresponding to the initial third feature extraction network and the gradient corresponding to the fourth feature extraction network are obtained based on the first loss, orthogonalization processing may be performed on the gradient corresponding to the initial third feature extraction network and the gradient corresponding to the fourth feature extraction network, so that directions of the obtained first gradient and the gradient corresponding to the fourth feature extraction network are orthogonal (or nearly orthogonal).

In a possible implementation, in a process of predicting the second operation information of the user for the item by using the first neural network based on the attribute information, and predicting the first recommendation scenario of the operation data by using the second neural network based on the attribute information, the information indicating the target recommendation scenario is not used as inputs of the third feature extraction network and the fourth feature extraction network.

Because the first operation information is used as a ground truth (ground truth) for training the third feature extraction network, the first operation information does not need to be input into the first feature extraction network in a feedforward process. Because the information indicating the target recommendation scenario is used as a ground truth (ground truth) for training the fourth feature extraction network, the information indicating the target recommendation scenario does not need to be input into the third feature extraction network in the feedforward process.

In embodiments of this application, to improve generalization of the model, an invariant representation obtained by using the third feature extraction network and a variant representation obtained by using the fourth feature extraction network may be combined (or referred to as fused), so that a combined representation can still have a high estimation capability in a neural network (used to predict operation information).

In a possible implementation, the invariant representation obtained by using the third feature extraction network and the variant representation obtained by using the fourth feature extraction network may be input into a fourth neural network, to predict fifth operation information of the user for the item. A difference between the fifth operation information and the first operation information is used to determine the first loss. For example, the invariant representation obtained by using the third feature extraction network and the variant representation obtained by using the fourth feature extraction network may be fused (for example, a splicing operation is performed), and a fusion result is input into the fourth neural network. Optionally, the fourth neural network and the first neural network may have a same or similar network structure. For details, refer to the description of the first neural network in the foregoing embodiment. Details are not described herein again.

In a possible implementation, the invariant representation obtained by using the third feature extraction network and the variant representation obtained by using the fourth feature extraction network may be input into the fourth neural network, to obtain the fifth operation information of the user for the item, and the first loss is constructed based on the difference between the fifth operation information and the first operation information (that is, the ground truth). In other words, the first loss may further include the difference between the fifth operation information and the first operation information in addition to a loss item of the difference between the first operation information and the second operation information and a loss item of the difference between the first recommendation scenario and the target recommendation scenario.

In a possible implementation, a difference between the target operation information and the first operation information is used to determine a second loss; and the method further includes: updating the first feature extraction network based on the second loss.

In a possible implementation, in an actual model inference process, the trained third feature extraction network needs to be connected to a scenario-related operation information prediction network, and each scenario corresponds to a scenario-related operation information prediction network. During inference, to predict operation information of a user for an item in a recommendation scenario (a recommendation scenario A), in one aspect, attribute information of the user and the item is input to the trained third feature extraction network to obtain an embedding representation (for example, the first embedding representation). In another aspect, the attribute information of the user and the item is input to a feature extraction network related to the recommendation scenario A (or the attribute information is input to a feature extraction network related to each scenario, and then output information is weighted based on a weight of the scenario), to obtain an embedding representation (for example, the second embedding representation). The first embedding representation and the second embedding representation may be fused and input to an operation information prediction network corresponding to the recommendation scenario A, to obtain predicted operation information (for example, the target operation information).

Therefore, in a training process, for update of the third feature extraction network, in addition to a gradient (for example, the first gradient) obtained based on back propagation of an output of the first neural network, a gradient (for example, the second gradient) obtained based on back propagation of an output (for example, the target operation information) of an operation information prediction network corresponding to each scenario further needs to be used for update.

However, the gradient is a gradient (for example, the second gradient) related to a specific scenario. There is negative impact between the gradient (for example, the second gradient) and a gradient (for example, the first gradient) obtained based on the invariant representation (parameter update directions of the two gradients may conflict with each other, for example, a gradient A and a gradient B are gradients in opposite directions, and if the gradient A and the gradient B are directly superimposed for update, it is equivalent to that no parameter update is performed). As a result, effective information between the two gradients cannot be well used to improve effect of the corresponding scenario.

In embodiments of this application, to resolve the foregoing problem, the third feature extraction network is first updated based on the gradient obtained based on the invariant representation. Then, the attribute information of the user and the item is processed based on a feature extraction network (for example, the second feature extraction network) related to the recommendation scenario (or the attribute information is input to a feature extraction network related to each scenario, and then is weighted based on a weight of the scenario), to obtain an embedding representation (for example, the second embedding representation). In addition, the attribute information of the user and the item is processed based on the updated third feature network, to obtain the embedding representation (for example, the first embedding representation). The first embedding representation and the second embedding representation may be fused and input into an operation information prediction network corresponding to the recommendation scenario A, to obtain predicted operation information (for example, the target operation information), a loss (for example, the second loss) is obtained based on the target operation information, a gradient (for example, the second gradient) is determined based on the second loss, and the first feature extraction network is updated based on the second gradient.

In the foregoing manner, in this application, the third feature extraction is not updated after the gradient obtained based on the invariant representation is combined with the gradient obtained based on the scenario-related operation information, but the first feature extraction network is updated based on the gradient obtained based on the scenario-related operation information after the third feature extraction network is updated based on the gradient obtained based on the invariant representation (the first feature extraction network is obtained). In this way, there is no negative impact between the gradient related to the specific scenario and the gradient obtained based on the invariant representation, and effective information between the two gradients can be well used to improve effect of the corresponding scenario.

In a possible implementation, the obtaining a first embedding representation and a second embedding representation respectively by using a first feature extraction network and a second feature extraction network based on the attribute information includes: obtaining the second embedding representation by using the second feature extraction network based on the attribute information; and the obtaining the second embedding representation by using the second feature extraction network based on the attribute information includes: obtaining a plurality of embedding representations based on the attribute information by using a plurality of feature extraction networks including the second feature extraction network, where each feature extraction network corresponds to one recommendation scenario, and the second feature extraction network corresponds to the target recommendation scenario; and fusing the plurality of embedding representations to obtain the second embedding representation.

In a possible implementation, the fusing the plurality of embedding representations includes: predicting, based on the attribute information, a probability value that the attribute information corresponds to each recommendation scenario; and fusing the plurality of embedding representations by using each probability value as a weight of a corresponding recommendation scenario.

That is, a corresponding feature extraction network may be disposed for each recommendation scenario. In a feedforward process, attribute information is input to each feature extraction network, each feature extraction network may output one embedding representation, and a plurality of embedding representation output by a plurality of feature extraction networks may be fused. In the fusion manner, a weight (or referred to as a probability value) corresponding to each recommendation scenario may be determined based on the attribute information, and the plurality of embedding representations are fused based on the probability value, to obtain the second embedding representation. In a possible implementation, a probability value that the attribute information corresponds to each recommendation scenario may be obtained based on the attribute information; and a plurality of embedding representations are fused by using each probability value as a weight of a corresponding recommendation scenario, to obtain the second embedding representation. For example, weighted summation may be performed.

In a possible implementation, the fourth neural network may be used to obtain a probability value that the attribute information corresponds to each recommendation scenario. The fourth neural network may reuse the second neural network, and use a probability that is output and that is for each recommendation scenario as a weight of a plurality of embedding representations. Alternatively, the fourth neural network having a recommendation scenario prediction capability may be retrained in an end-to-end manner, to implement efficient fusion of a plurality of pieces of scenario information.

In a possible implementation, during each iteration, the model may be updated based on a gradient obtained based on data of one batch (batch). The data of a same batch may include operation data in different recommendation scenarios. For example, operation data in the second recommendation scenario may be included. A loss (for example, the third loss in embodiments of this application) and a gradient used to update the first feature extraction network may alternatively be obtained based on the operation data in the second recommendation scenario. However, the gradient obtained based on the second loss and the gradient obtained based on the third loss are gradients obtained in different recommendation scenarios, and there may be negative impact between the two gradients (parameter update directions of the two gradients may conflict with each other, for example, a gradient A and a gradient B are gradients in opposite directions, and if the gradient A and the gradient B are directly superimposed for update, it is equivalent to that no parameter update is performed). Therefore, effective information between the two gradients cannot be well used to improve effect of the corresponding scenario.

To resolve the foregoing problem, in embodiments of this application, orthogonalization processing is performed on the gradient obtained based on the second loss and the gradient obtained based on the third loss, to reduce mutual negative impact between gradients obtained in different recommendation scenarios.

In a possible implementation, the operation data (including the attribute information) of the user in the second recommendation scenario may be obtained; and the operation information of the user for the item in the second recommendation scenario is predicted based on the operation data in the second recommendation scenario (for example, the attribute information of the operation data of the user in the second recommendation scenario may be input into a feature extraction network corresponding to the second recommendation scenario, to obtain an embedding representation; for details, refer to the description of the second feature extraction network in the foregoing embodiment; and the embedding representation may be input to a neural network (used to predict the operation information in the second recommendation scenario) corresponding to the second recommendation scenario, to obtain a corresponding prediction result). The prediction result and a ground truth of the operation information of the operation data in the second recommendation scenario may be used to determine the third loss. The gradient (a third gradient) corresponding to the first feature extraction network may be obtained during back propagation of the third loss.

In a possible implementation, orthogonalization processing may be performed, based on the second loss and the third loss, on a plurality of gradients corresponding to the first feature extraction network, to obtain a plurality of third gradients corresponding to the first feature extraction network, where one of the plurality of third gradients is obtained based on the second loss, and one of the plurality of third gradients is obtained based on the third loss; the plurality of third gradients are fused (for example, fused in a vector summation manner) to obtain a second gradient corresponding to the first feature extraction network; and the first feature extraction network is updated based on the second gradient.

In a possible implementation, the operation data includes information indicating the target recommendation scenario; and the method further includes: obtaining a third embedding representation by using the second feature extraction network based on the operation data; predicting third operation information of the user for the item by using a third neural network based on the third embedding representation, where a difference between the third operation information and the first operation information is used to determine a fourth loss; and updating the third neural network and the second feature extraction network based on the fourth loss.

It should be understood that, in the foregoing weighted fusion manner of the embedding representations obtained by using the plurality of feature extraction networks, the second embedding representation obtained through fusion can have more corresponding recommendation scenario information and less non-corresponding recommendation scenario information. However, because the attribute information (excluding the information indicating the target recommendation scenario) is input into the plurality of feature extraction networks, the embedding representation output by the plurality of feature extraction networks does not have accurate semantic information of the corresponding recommendation scenario. Therefore, in a process of training the plurality of feature extraction networks, both information indicating a recommendation scenario and attribute information may be additionally input into the feature extraction network, to participate in a feedforward process of network training.

In a possible implementation, the operation information indicates whether the user performs a target operation on the item, and the target operation includes at least one of the following: a click operation, a browse operation, an add-to-cart operation, and a purchase operation.

In a possible implementation, the attribute information includes a user attribute of the user, and the user attribute includes at least one of the following: a gender, an age, an occupation, an income, a hobby, and an education level.

In a possible implementation, the attribute information includes an item attribute of the item, and the item attribute includes at least one of the following: an item name, a developer, an installation package size, a category, and a degree of praise.

The attribute information of the user may be an attribute related to a preference feature of the user, and is at least one of a gender, an age, an occupation, an income, a hobby, and an education level. The gender may be a male or a female, the age may be a number ranging from 0 to 100, the occupation may be a teacher, a programmer, a chef, or the like, the hobby may be basketball, tennis, running, or the like, and the education level may be a primary school, a middle school, a high school, a university, or the like. A specific type of the attribute information of the user is not limited in this application.

The item may be a physical item or a virtual item, for example, may be an item such as an app, audio/video, a web page, and news. The attribute information of the item may be at least one of an item name, a developer, an installation package size, a category, and a degree of praise. For example, the item is an application. The category of the item may be a chat category, a running game, an office category, or the like, and the degree of praise may be a score and a comment made on the item, or the like. A specific type of the attribute information of the item is not limited in this application.

In a possible implementation, different recommendation scenarios are different applications; different recommendation scenarios are different types of applications (for example, a video application and a browser application are different applications); or different recommendation scenarios are different functions of a same application (for example, different channels of a same application, such as a news channel and a technology channel). The different functions may be classified based on recommendation categories.

In a possible implementation, the method further includes: when the target operation information meets a preset condition, determining to recommend the item to the user.

According to a second aspect, this application provides an operation prediction apparatus. The apparatus includes:

an obtaining module, configured to obtain attribute information of a user and an item in a target recommendation scenario;
a feature extraction module, configured to obtain a first embedding representation and a second embedding representation respectively by using a first feature extraction network and a second feature extraction network based on the attribute information, where the first embedding representation indicates a feature unrelated to recommendation scenario information, the second embedding representation indicates a feature related to the target recommendation scenario, and the first embedding representation and the second embedding representation are used for fusion to obtain a fused embedding representation; and

a prediction module, configured to predict target operation information of the user for the item based on the fused embedding representation.

In a possible implementation, the attribute information includes operation data of the user in the target recommendation scenario, and the operation data further includes first operation information of the user for the item; the prediction module is further configured to:

predict second operation information of the user for the item by using a first neural network based on the attribute information; and

predict a first recommendation scenario of the operation data by using a second neural network based on the attribute information, where a difference between the first operation information and the second operation information and a difference between the first recommendation scenario and the target recommendation scenario are used to determine a first loss; and

the apparatus further includes:

a model update module, further configured to: perform, based on the first loss, orthogonalization processing on a gradient corresponding to a third feature extraction network in the first neural network and a gradient corresponding to a fourth feature extraction network in the second neural network, to obtain a first gradient corresponding to an initial feature extraction network; and

update the third feature extraction network based on the first gradient, to obtain the first feature extraction network.

In a possible implementation, a difference between the target operation information and the first operation information is used to determine a second loss; and the model update module is further configured to: update the first feature extraction network based on the second loss.

In a possible implementation, the feature extraction module is specifically configured to obtain the second embedding representation by using the second feature extraction network based on the attribute information; and the obtaining the second embedding representation by using the second feature extraction network based on the attribute information includes:

obtaining a plurality of embedding representations based on the attribute information by using a plurality of feature extraction networks including the second feature extraction network, where each feature extraction network corresponds to one recommendation scenario, and the second feature extraction network corresponds to the target recommendation scenario; and

fusing the plurality of embedding representations to obtain the second embedding representation.

In a possible implementation, the feature extraction module is specifically configured to: predict, based on the attribute information, a probability value that the attribute information corresponds to each recommendation scenario; and fuse the plurality of embedding representations by using each probability value as a weight of a corresponding recommendation scenario.

In a possible implementation, the obtaining module is further configured to:

obtain operation data of the user in a second recommendation scenario;

the prediction module is further configured to: predict operation information of the user for the item in the second recommendation scenario based on the operation data in the second recommendation scenario, where the operation information of the user for the item in the second recommendation scenario is used to determine a third loss; and

the model update module is specifically configured to: perform, based on the second loss and the third loss, orthogonalization processing on a plurality of gradients corresponding to the first feature extraction network, to obtain a plurality of third gradients corresponding to the first feature extraction network;

fuse the plurality of fourth gradients to obtain a second gradient corresponding to the first feature extraction network; and

update the first feature extraction network based on the second gradient.

In a possible implementation, the operation data includes information indicating the target recommendation scenario; and the feature extraction module is further configured to: obtain a third embedding representation by using the second feature extraction network based on the operation data; and

predict third operation information of the user for the item by using a third neural network based on the third embedding representation, where a difference between the third operation information and the first operation information is used to determine a fourth loss; and

the model update module is further configured to update the third neural network and the second feature extraction network based on the fourth loss.

In a possible implementation, the target operation information indicates whether the user performs a target operation on the item, and the target operation includes at least one of the following:

a click operation, a browse operation, an add-to-cart operation, and a purchase operation.

In a possible implementation, the attribute information includes a user attribute of the user, and the user attribute includes at least one of the following: a gender, an age, an occupation, an income, a hobby, and an education level.

In a possible implementation, the attribute information includes an item attribute of the item, and the item attribute includes at least one of the following: an item name, a developer, an installation package size, a category, and a degree of praise.

In a possible implementation, different recommendation scenarios are different applications;

different recommendation scenarios are different types of applications; or
different recommendation scenarios are different functions of a same application.

In a possible implementation, the apparatus further includes:

when the target operation information meets a preset condition, determining to recommend the item to the user.

According to a third aspect, an embodiment of this application provides a model training method. The method includes:

obtaining operation data of a user in a target recommendation scenario, where the operation data includes attribute information of the user and an item, and first operation information of the user for the item;

predicting second operation information of the user for the item by using a first neural network based on the attribute information;

predicting a first recommendation scenario of the operation data by using a second neural network based on the attribute information, where a difference between the first operation information and the second operation information and a difference between the first recommendation scenario and the target recommendation scenario are used to determine a first loss;

performing, based on the first loss, orthogonalization processing on a gradient corresponding to a third feature extraction network in the first neural network and a gradient corresponding to a fourth feature extraction network in the second neural network, to obtain a first gradient corresponding to an initial feature extraction network; and

updating the third feature extraction network based on the first gradient, to obtain a first feature extraction network.

In a possible implementation, the method further includes:

obtaining a first embedding representation and a second embedding representation respectively by using the first feature extraction network and a second feature extraction network based on the attribute information, where the first embedding representation and the second embedding representation are used for fusion to obtain a fused embedding representation;

predicting target operation information of the user for the item based on the fused embedding representation, where a difference between the target operation information and the first operation information is used to determine a second loss; and

updating the first feature extraction network based on the second loss.

In a possible implementation, the obtaining a first embedding representation and a second embedding representation respectively by using the first feature extraction network and a second feature extraction network based on the attribute information includes:

obtaining the second embedding representation by using the second feature extraction network based on the attribute information; and

the obtaining the second embedding representation by using the second feature extraction network based on the attribute information includes:

obtaining a plurality of embedding representations based on the attribute information by using a plurality of feature extraction networks including the second feature extraction network, where each feature extraction network corresponds to one recommendation scenario, and the second feature extraction network corresponds to the target recommendation scenario; and

fusing the plurality of embedding representations to obtain the second embedding representation.

In a possible implementation, the method further includes:

obtaining operation data of the user in a second recommendation scenario; and

predicting operation information of the user for the item in the second recommendation scenario based on the operation data in the second recommendation scenario, where the operation information of the user for the item in the second recommendation scenario is used to determine a third loss; and

the updating the first feature extraction network based on the second loss includes:

performing, based on the second loss and the third loss, orthogonalization processing on a plurality of gradients corresponding to the first feature extraction network, to obtain a plurality of third gradients corresponding to the first feature extraction network;

fusing the plurality of fourth gradients to obtain a second gradient corresponding to the first feature extraction network; and

updating the first feature extraction network based on the second gradient.

According to a fourth aspect, an embodiment of this application provides a model training apparatus. The apparatus includes:

an obtaining module, configured to obtain operation data of a user in a target recommendation scenario, where the operation data includes attribute information of the user and an item, and first operation information of the user for the item;

a prediction module, configured to: predict second operation information of the user for the item by using a first neural network based on the attribute information;

predict a first recommendation scenario of the operation data by using a second neural network based on the attribute information, where a difference between the first operation information and the second operation information and a difference between the first recommendation scenario and the target recommendation scenario are used to determine a first loss; and

perform, based on the first loss, orthogonalization processing on a gradient corresponding to a third feature extraction network in the first neural network and a gradient corresponding to a fourth feature extraction network in the second neural network, to obtain a first gradient corresponding to an initial feature extraction network; and

a model update module, configured to update the third feature extraction network based on the first gradient, to obtain a first feature extraction network.

In a possible implementation, the apparatus further includes:

a feature extraction module, configured to obtain a first embedding representation and a second embedding representation respectively by using the first feature extraction network and a second feature extraction network based on the attribute information, where the first embedding representation and the second embedding representation are used for fusion to obtain a fused embedding representation.

The prediction module is further configured to predict target operation information of the user for the item based on the fused embedding representation, where a difference between the target operation information and the first operation information is used to determine a second loss; and

the model update module is further configured to update the first feature extraction network based on the second loss.

In a possible implementation, the obtaining a first embedding representation and a second embedding representation respectively by using the first feature extraction network and a second feature extraction network based on the attribute information includes:

obtaining the second embedding representation by using the second feature extraction network based on the attribute information; and

the obtaining the second embedding representation by using the second feature extraction network based on the attribute information includes:

obtaining a plurality of embedding representations based on the attribute information by using a plurality of feature extraction networks including the second feature extraction network, where each feature extraction network corresponds to one recommendation scenario, and the second feature extraction network corresponds to the target recommendation scenario; and

fusing the plurality of embedding representations to obtain the second embedding representation.

In a possible implementation, the obtaining module is further configured to:

obtain operation data of the user in a second recommendation scenario;

the prediction module is further configured to: predict operation information of the user for the item in the second recommendation scenario based on the operation data in the second recommendation scenario, where the operation information of the user for the item in the second recommendation scenario is used to determine a third loss; and the model update module is specifically configured to: perform, based on the second loss and the third loss, orthogonalization processing on a plurality of gradients corresponding to the first feature extraction network, to obtain a plurality of third gradients corresponding to the first feature extraction network;

fuse the plurality of fourth gradients to obtain a second gradient corresponding to the first feature extraction network; and

update the first feature extraction network based on the second gradient.

According to a fifth aspect, an embodiment of this application provides an operation prediction apparatus. The apparatus may include a memory, a processor, and a bus system. The memory is configured to store a program, and the processor is configured to execute the program in the memory, to perform any optional method according to the first aspect.

According to a sixth aspect, an embodiment of this application provides a model training apparatus. The apparatus may include a memory, a processor, and a bus system. The memory is configured to store a program, and the processor is configured to execute the program in the memory, to perform any optional method according to the third aspect.

According to a seventh aspect, an embodiment of this application provides a computer-readable storage medium. The computer-readable storage medium stores a computer program, and when the computer program is run on a computer, the computer is enabled to perform the first aspect and any optional method according to the first aspect, and any optional method according to the third aspect.

According to an eighth aspect, an embodiment of this application provides a computer program product, including code. When being executed, the code is used to implement the first aspect and any optional method according to the first aspect, and any optional method according to the third aspect.

According to a ninth aspect, this application provides a chip system. The chip system includes a processor, configured to support an execution device or a training device in implementing the functions in the foregoing aspects, for example, sending or processing data or information in the foregoing methods. In a possible design, the chip system further includes a memory. The memory is configured to store necessary program instructions and data of the execution device or the training device. The chip system may include a chip, or may include a chip and another discrete component.

## BRIEF DESCRIPTION OF DRAWINGS

FIG. 1 is a diagram of a structure of an artificial intelligence main framework;
FIG. 2 is a diagram of a system architecture according to an embodiment of this application;
FIG. 3 is a diagram of a system architecture according to an embodiment of this application;
FIG. 4 is a diagram of a recommendation scenario according to an embodiment of this application;
FIG. 5 is a schematic flowchart of an operation prediction method according to an embodiment of this application;
FIG. 6 is a diagram of a recommendation model;
FIG. 7 is a diagram of a recommendation model;
FIG. 8 is a diagram of a recommendation model;
FIG. 9 is a diagram of a recommendation model;
FIG. 10 is a schematic flowchart of an operation prediction method according to an embodiment of this application;
FIG. 11 is a diagram of a structure of a recommendation apparatus according to an embodiment of this application;
FIG. 12 is a diagram of an execution device according to an embodiment of this application;
FIG. 13 is a diagram of a training device according to an embodiment of this application; and
FIG. 14 is a diagram of a chip according to an embodiment of this application.

## DESCRIPTION OF EMBODIMENTS

The following describes embodiments of the present invention with reference to the accompanying drawings in embodiments of the present invention. Terms used in embodiments of the present invention are merely used to explain specific embodiments of the present invention, but are not intended to limit the present invention.

The following describes embodiments of this application with reference to accompanying drawings. A person of ordinary skill in the art may learn that, with technology development and emergence of a new scenario, technical solutions provided in embodiments of this application are also applicable to a similar technical problem.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any variant thereof are intended to cover non-exclusive inclusion, so that a process, method, system, product, or device that includes a series of units is not necessarily limited to those units, but may include other units not expressly listed or inherent to such a process, method, product, or device.

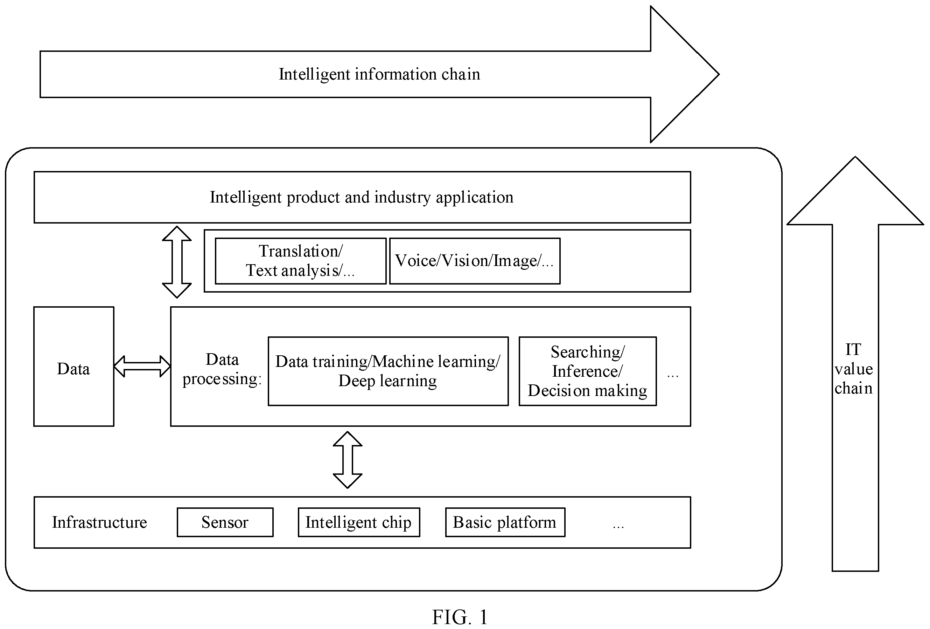

An overall working procedure of an artificial intelligence system is first described. FIG. 1 shows a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. In an example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip like a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, voice, and text, further relates to internet of things data of a conventional device, and includes service data of an existing system and perception data such as force, displacement, a liquid level, a temperature, and humidity.

(3) Data processing

Data processing usually includes data training, machine learning, deep learning, searching, inference, decision making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control strategy. A typical function is searching and matching.

Decision making is a process of making a decision after intelligent information is inferred, and usually provides functions such as classification, ranking, and prediction.

(4) General capability

After data processing mentioned above is performed on the data, some general capabilities may further be formed based on a data processing result. For example, the general capabilities may be an algorithm or a general system, for example, translation, text analysis, computer vision processing, voice recognition, and image recognition.

(5) Intelligent product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent products and industry application mainly include intelligent terminals, intelligent transportation, intelligent health care, autonomous driving, smart cities, and the like.

Embodiments of this application are applied to the information recommendation field. The scenario includes but is not limited to scenarios related to e-commerce product recommendation, search engine result recommendation, application market recommendation, music recommendation, and video recommendation. A recommended item in various different application scenarios may also be referred to as an "object" for ease of subsequent description. That is, in different recommendation scenarios, the recommended object may be an app, a video, music, or a commodity (for example, a presentation interface of an online shopping platform displays different commodities according to different users, which may also be presented by using a recommendation result of a recommendation model in essence). These recommendation scenarios are usually related to collection of a user behavior log, log data preprocessing (for example, quantization and sampling), sample set training to obtain a recommendation model, and analysis and processing of, based on the recommendation model, an object (for example, an app or music) in a scenario corresponding to a training sample item. For example, if a sample selected in a training phase of the recommendation model is from an operation behavior performed by a user of an application market in a mobile phone on a recommended app, the recommendation model obtained through training is applicable to the app application market in the mobile phone, or may be used in an app application market in another type of terminal to recommend an app in the terminal. The recommendation model finally calculates a recommendation probability or a score of each to-be-recommended object. A recommendation system selects a recommendation result according to a specific selection rule, for example, performs ranking based on the recommendation probability or the score, and presents the recommendation result to the user by using a corresponding application or terminal device, and the user performs an operation on an object in the recommendation result to generate a user behavior log and another phase.

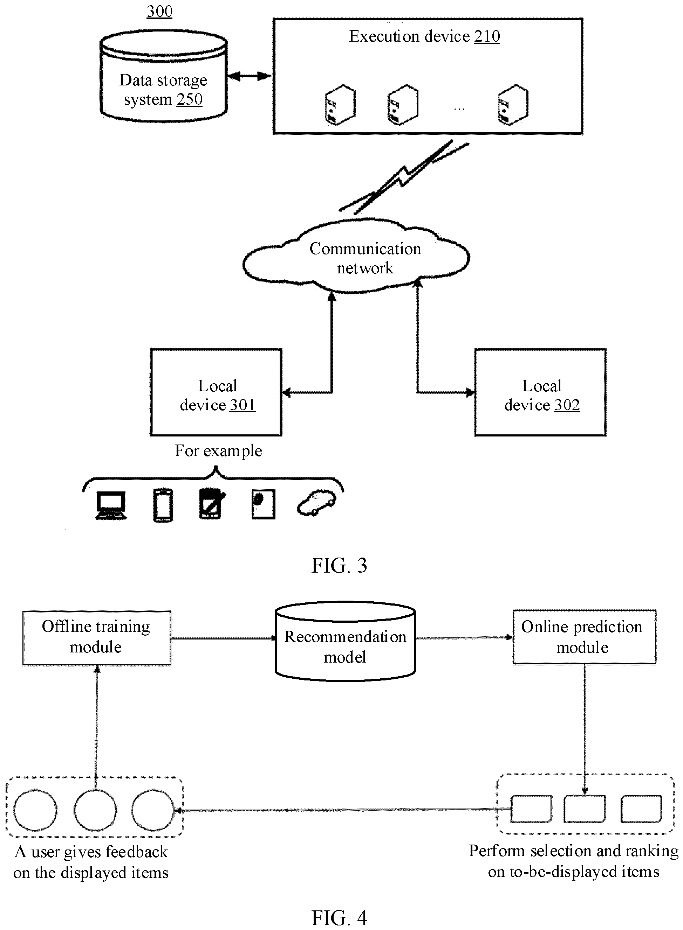

Refer to FIG. 4. In a recommendation process, when a user interacts with a recommendation system, a recommendation request is triggered, and the recommendation system inputs the request and related feature information into a deployed recommendation model, and then predicts a click-through rate of the user for all candidate objects. Then, the candidate objects are sorted in descending order based on the predicted click-through rate, and the candidate objects are displayed in different locations in sequence as a recommendation result for the user. The user browses a displayed item and performs a user behavior, such as browsing, clicking, and downloading. These user behaviors are stored in a log as training data. Parameters of the recommendation model are irregularly updated by using an offline training module, to improve recommendation effect of the model.

For example, when a user opens an application market in a mobile phone, a recommendation module in the application market may be triggered. The recommendation module in the application market predicts download possibilities of the user for given candidate applications based on a historical download record of the user, a click record of the user, a feature of the application, and environment feature information such as time and a location. Based on a prediction result, the application market displays the applications in descending order of the possibilities, to increase a download probability of the application. Specifically, an application that is more likely to be downloaded is presented before an application that is less likely to be downloaded. A user behavior is also stored in a log, and a parameter of a prediction model is trained and updated by using an offline training module.

For another example, in a lifelong partner-related application, a cognitive brain may be constructed based on historical data of a user in domains such as video, music, and news, by using various models and algorithms, and by simulating a human brain mechanism, and a lifelong learning system framework of the user may be established. A lifelong partner may record a past event of the user based on system data, application data, and the like, understand a current intention of the user, predict a future action or behavior of the user, and finally implement an intelligent service. In the current first phase, user behavior data (including information such as short message service messages, photos, and email events on the terminal side) is obtained based on a music app, a video app, and a browser app. In one aspect, a user profile system is constructed. In another aspect, learning and memory modules based on user information filtering, association analysis, cross-domain recommendation, causal reasoning, and the like are implemented to construct a personal knowledge graph of the user.

The following describes an application architecture in embodiments of this application.

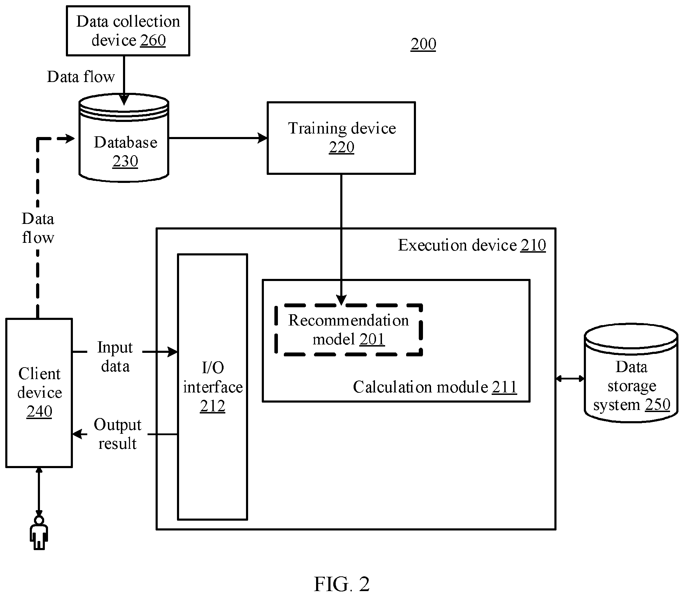

Refer to FIG. 2. An embodiment of the present invention provides a recommendation system architecture 200. A data collection device 260 is configured to collect a sample. One training sample may include a plurality of pieces of feature information (or described as attribute information, for example, a user attribute and an item attribute). There may be a plurality of types of feature information. The feature information may specifically include user feature information, object feature information, and a label feature. The user feature information represents a feature of a user, for example, a gender, an age, an occupation, or a hobby. The object feature information represents a feature of an object pushed to the user. Different recommendation systems correspond to different objects, and types of features that need to be extracted for different objects are also different. For example, an object feature extracted from a training sample of an app market may be a name (an identifier), a type, a size, or the like of an app. An object feature extracted from a training sample of an e-commerce app may be a name, a category, a price range, or the like of a commodity. The label feature indicates whether a sample is a positive sample or a negative sample. Generally, a label feature of a sample may be obtained based on operation information of the user for a recommended object. If the user performs an operation on the recommended object, the sample is a positive sample; or if the user does not perform an operation on or browsed only the recommended object, the sample is a negative sample. For example, when the user clicks, downloads, or purchases the recommended object, the label feature is 1, indicating that the sample is the positive sample; or if the user does not perform any operation on the recommended object, the label feature is 0, indicating that the sample is the negative sample. The sample may be stored in a database 230 after being collected. Some or all feature information in the sample in the database 230 may be directly obtained from a client device 240, for example, user feature information, operation information (used to determine a type identifier) of a user for an object, and object feature information (for example, an object identifier). A training device 220 obtains a model parameter matrix through sample training in the database 230, to generate a recommendation model 201 (for example, a feature extraction network and a neural network in embodiments of this application). The following describes in more detail how the training device 220 performs training to obtain the model parameter matrix used to generate the recommendation model 201. The recommendation model 201 can be used to evaluate a large quantity of objects to obtain a score of each to-be-recommended object, and further recommend a specified quantity of objects or a preset quantity of objects from an evaluation result of the large quantity of objects. A calculation module 211 obtains a recommendation result based on the evaluation result of the recommendation model 201, and recommends the recommendation result to the client device through an I/O interface 212.

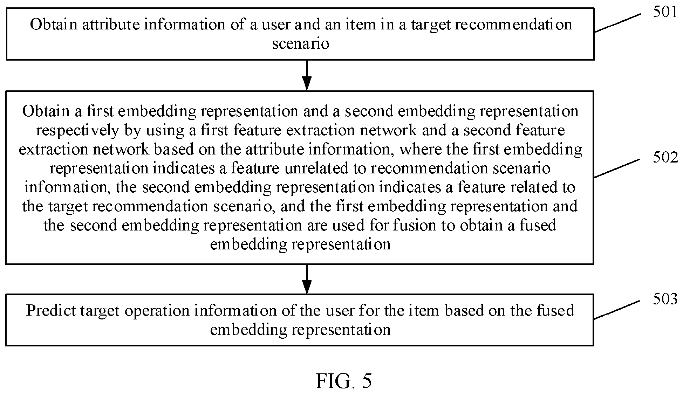

In this embodiment of this application, the training device 220 may select a positive sample and a negative sample from a sample set in the database 230, and add the positive sample and the negative sample to a training set, and then train the sample in the training set by using the recommendation model, to obtain a trained recommendation model. For implementation details of the calculation module 211, refer to the detailed description of the method embodiment shown in FIG. 5.

After obtaining the model parameter matrix through sample training for constructing the recommendation model 201, the training device 220 sends the recommendation model 201 to an execution device 210, or directly send the model parameter matrix to an execution device 210, to construct a recommendation model in the execution device 210 for recommendation of a corresponding system. For example, a recommendation model obtained through training based on a video-related sample may be used in a video website or an app to recommend a video to a user, and a recommendation model obtained through training based on an app-related sample may be used in an application market to recommend an app to a user.

The execution device 210 is provided with the I/O interface 212, to exchange data with an external device. The execution device 210 may obtain user feature information, for example, a user identifier, a user identity, a gender, an occupation, and a hobby, from the client device 240 through the I/O interface 212. This part of information may alternatively be obtained from a system database. The recommendation model 201 recommends a target recommendation object to the user based on the user feature information and feature information of the to-be-recommended object. The execution device 210 may be disposed in a cloud server, or may be disposed in a user client.

The execution device 210 may invoke data, code, and the like in a data storage system 250, and may store output data in the data storage system 250. The data storage system 250 may be disposed in the execution device 210, may be independently disposed, or may be disposed in another network entity, and there may be one or more data storage systems 250.

The calculation module 211 processes the user feature information and the feature information of the to-be-recommended object by using the recommendation model 201. For example, the calculation module 211 analyzes and processes the user feature information and the feature information of the to-be-recommended object by using the recommendation model 201, to obtain a score of the to-be-recommended object, and ranks the to-be-recommended object based on the score. An object with a high ranking is used as an object recommended to the client device 240.

Finally, the I/O interface 212 returns the recommendation result to the client device 240, and presents the recommendation result to the user.

Furthermore, the training device 220 may generate corresponding recommendation models 201 for different targets based on different sample feature information, to provide a better result for the user.

It should be noted that, FIG. 2 is merely a diagram of a system architecture according to an embodiment of the present invention. A location relationship between devices, components, modules, and the like shown in the figure does not constitute any limitation. For example, in FIG. 2, the data storage system 250 is an external storage device relative to the execution device 210, and in another case, the data storage system 250 may alternatively be disposed in the execution device 210.

In this embodiment of this application, the training device 220, the execution device 210, and the client device 240 may be three different physical devices, or the training device 220 and the execution device 210 may be on a same physical device or one cluster, or the execution device 210 and the client device 240 may be on a same physical device or one cluster.

FIG. 3 is a system architecture 300 according to an embodiment of the present invention. In this architecture, an execution device 210 is implemented by one or more servers. Optionally, the execution device 210 cooperates with another computing device, for example, a device such as a data storage device, a router, or a load balancer. The execution device 210 may be disposed on one physical site, or distributed on a plurality of physical sites. The execution device 210 may use data in a data storage system 250 or invoke program code in a data storage system 250 to implement an object recommendation function. Specifically, information about to-be-recommended objects is input into a recommendation model, and the recommendation model generates an estimated score for each to-be-recommended object, then ranks the to-be-recommended objects in descending order of the estimated scores, and recommends a to-be-recommended object to a user based on a ranking result. For example, top 10 objects in the ranking result are recommended to the user.

The data storage system 250 is configured to receive and store a parameter of a recommendation model sent by a training device, is configured to store data of a recommendation result obtained by using the recommendation model, and certainly may further include program code (or instructions) needed for normal running of the storage system 250. The data storage system 250 may be one device that is deployed outside the execution device 210 or a distributed storage cluster including a plurality of devices that are deployed outside the execution device 210. In this case, when the execution device 210 needs to use the data in the storage system 250, the storage system 250 may send the data needed by the execution device to the execution device 210. Correspondingly, the execution device 210 receives and stores (or temporarily buffers) the data. Certainly, the data storage system 250 may be alternatively deployed on the execution device 210. When deployed on the execution device 210, the distributed storage system may include one or more memories. Optionally, when there are a plurality of memories, different memories are configured to store different types of data, for example, the model parameter of the recommendation model generated by the training device and the data of the recommendation result obtained by using the recommendation model may be separately stored in two different memories.

Users may operate their user devices (for example, a local device 301 and a local device 302) to interact with the execution device 210. Each local device may represent any computing device, for example, a personal computer, a computer workstation, a smartphone, a tablet computer, an intelligent camera, a smart automobile, another type of cellular phone, a media device, a wearable device, a set-top box, or a game console.

The local device of each user may interact with the execution device 210 through a communication network compliant with any communication mechanism/communication standard. The communication network may be a wide area network, a local area network, a point-to-point connection, or any combination thereof.

In another implementation, the execution device 210 may be implemented by a local device. For example, the local device 301 may implement, by using a recommendation model, a recommendation function of the execution device 210 to obtain user feature information and feed back a recommendation result to a user, or provide a service for a user of the local device 302.

Embodiments of this application relate to massive application of a neural network. Therefore, for ease of understanding, the following first describes terms and concepts related to the neural network in embodiments of this application.

1. Click-through rate (click-through rate, CTR)

The click-through rate is a ratio of a quantity of times recommendation information (for example, a recommendation item) on a website or an application is clicked to a quantity of times of exposure of the recommendation information. The click-through rate is usually an important indicator for measuring a recommendation system in recommendation systems.

2. Personalized recommendation system

The personalized recommendation system is a system that performs analysis according to a machine learning algorithm based on historical data of a user (for example, operation information in embodiments of this application), predicts a new request on this basis, and provides a personalized recommendation result.

3. Offline training (offline training)

The offline training is a module, in a personalized recommendation system, that iteratively updates parameters of a recommendation model according to a machine learning algorithm based on historical data of a user (for example, operation information in embodiments of this application) until a specified requirement is met.

4. Online inference (online inference)

The online inference is to predict, based on a model obtained through offline training, favorability of a user for a recommended item in a current context environment based on features of the user, the item, and a context and predict a probability that the user selects the recommended item.

For example, FIG. 3 is a diagram of a recommendation system according to an embodiment of this application. As shown in FIG. 3, when a user enters a system, a recommendation request is triggered. The recommendation system inputs the request and related information (for example, operation information in embodiments of this application) of the request into the recommendation model, and then predicts a selection rate of the user for an item in the system. Further, the items are sorted in descending order based on the predicted selection rates or a function of the selection rates. That is, the recommendation system may sequentially display the items at different locations as a recommendation result for the user. The user browses items at different locations, and performs user behaviors such as browsing, selecting, and downloading. In addition, an actual behavior of the user is stored in a log as training data. Parameters of the recommendation model are continuously updated by using an offline training module, to improve prediction effect of the model.

For example, when the user opens an application market in an intelligent terminal (for example, a mobile phone), a recommendation system in the application market may be triggered. The recommendation system in the application market predicts, based on a historical behavior log of the user, for example, a historical download record of the user and a user selection record, and a feature of the application market, for example, environment feature information such as time and a location, probabilities that the user downloads candidate recommended apps. Based on a calculated result, the recommendation system in the application market may present the candidate apps in descending order of values of the predicted probabilities, to improve a download probability of the candidate app.

For example, an app with a higher predicted user selection rate may be presented before an app with a lower predicted user selection rate.

The foregoing recommendation model may be a neural network model. The following describes related terms and concepts of a neural network that may be used in embodiments of this application.

(1) Neural network

The neural network may include a neural unit. The neural unit may be an operation unit that uses xs (namely, input data) and an intercept of 1 as an input. An output of the operation unit may be as follows:

$$h_{W,b}(x) = f\left(W^T x\right) = f\left(\sum\nolimits_{s=1}^{n} W_s x_s + b\right).$$

Herein, s=1, 2, ..., and n, n is a natural number greater than 1, Ws is a weight of xs, b is a bias of the neural unit, and f is an activation function (activation function) of the neural unit, and is used to introduce a non-linear feature into the neural network, to convert an input signal in the neural unit into an output signal. The output signal of the activation function may be used as an input of a next convolutional layer, and the activation function may be a sigmoid function. The neural network is a network formed by linking a plurality of single neural units together. To be specific, an output of a neural unit may be an input of another neural unit. An input of each neural unit may be connected to a local receptive field of a previous layer to extract a feature of the local receptive field. The local receptive field may be a region including several neural units.

(2) Deep neural network

The deep neural network (Deep Neural Network, DNN), also referred to as a multilayer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems complex, it is not complex in terms of work at each layer. Simply speaking, the DNN is the following linear relationship expression: $\vec{y} = \alpha(W\vec{x} + \vec{b})$, where $\vec{x}$ is an

input vector, $\vec{y}$ is an output vector, $\vec{b}$ is an offset vector, W is a weight matrix (also referred to as a coefficient), and $\alpha$ () is an activation function. At each layer, the output vector $\vec{y}$ is obtained by merely performing such a simple operation on the input vector $\vec{x}$. Because there are many layers in the DNN, there are also a large quantity of coefficients W and offset vectors b. Definitions of these parameters in the DNN are as follows: The coefficient W is used as an example. It is assumed that in a DNN having three layers, a linear coefficient from the fourth neuron at the second layer to the second neuron at the third layer is defined as $W_{24}^{3}$. The superscript 3 represents a layer at which the coefficient W is located, and the subscript corresponds to an output third-layer index 2 and an input second-layer index 4. In conclusion, a coefficient from the $k^{th}$ neuron at the $(L-1)^{th}$ layer to the $j^{th}$ neuron at the $L^{th}$ layer is defined as $W_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Loss function

In a process of training the deep neural network, because it is expected that an output of the deep neural network is as much as possible close to an actually expected predicted value, a predicted value of a current network and an actually expected target value may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the actually expected target value or a value that is very close to the actually expected target value. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(4) Back propagation algorithm

An error back propagation (back propagation, BP) algorithm may be used to correct a value of a parameter in an initial model in a training process, so that an error loss of the model becomes smaller. Specifically, an input signal is transferred forward until an error loss occurs at an output, and the parameter in the initial model is updated based on back propagation error loss information, to make the error loss converge. The back propagation algorithm is an error-loss-centered back propagation motion intended to obtain a parameter, such as a weight matrix, of an optimal model.

(5) Machine learning system

Parameters of a machine learning model are trained based on input data and labels by using an optimization method like gradient descent, and a model obtained through training is used to predict unknown data.

(6) Personalized recommendation system

The personalized recommendation system is a system that performs analysis and modeling according to a machine learning algorithm based on historical data of a user, predicts a new request of the user on this basis, and provides a personalized recommendation result.

(7) Recommendation scenario

The recommendation scenario may be an application (application, APP) that serves a specific requirement, such as Huawei Browser and Huawei Video, or may be a specific channel, like an entertainment channel, a news channel, or a technology channel in a browser feed.

(8) Multi-scenario modeling

The multi-scenario modeling is to integrate data in a plurality of scenarios, generate a model through training, and serve the plurality of scenarios.

A machine learning system, including a personalized recommendation system, trains parameters of a machine learning model based on input data and labels by using an optimization method like gradient descent. After the parameters of the model are converged, the model may be used to predict unknown data. Click-through rate prediction in the personalized recommendation system is used as an example. The input data includes a user attribute and a commodity attribute. How to predict a personalized recommendation list based on user preferences has important impact on improving recommendation precision of the recommendation system.

To meet personalized requirements of users, the recommendation system includes a plurality of recommendation scenarios, such as a browser, a leftmost screen, and a video stream. The user behaves differently based on preferences in different scenarios. Each scenario has both a user-specific behavior feature and a common behavior feature. Generally, each scenario is independently modeled.

However, a single scenario is independently modeled. Because a same user behaves differently in different scenarios, independent modeling for a single scenario cannot effectively capture behavior features of the user in different scenarios, and cannot more fully learn user preferences. In addition, when there are many scenarios, independent modeling and maintenance for each scenario is labor-intensive and resource-consuming.

In an existing implementation of an STAR (star topology adaptive recommender) model, a common behavior feature of a user in different scenarios is captured by using a multi-scenario model. For example, in the STAR (star topology adaptive recommender) model, a common feature extraction network is trained to adapt to each scenario. However, the common feature extraction network in the conventional technology cannot extract an embedding representation that can accurately represent a common behavior feature of a user in different scenarios, and consequently generalization of the recommendation model in each scenario is poor.

To resolve the foregoing problem, this application provides an operation prediction method. The operation prediction method may be a feedforward process of model training, or may be an inference process.

FIG. 5 is a diagram of an embodiment of an operation prediction method according to an embodiment of this application. As shown in FIG. 5, the operation prediction method provided in this embodiment of this application includes the following steps.

501: Obtain attribute information of a user and an item in a target recommendation scenario.

In this embodiment of this application, step 501 may be performed by a terminal device. The terminal device may be a portable mobile device, for example, but not limited to a mobile or portable computing device (such as a smartphone), a personal computer, a server computer, a handheld device (such as a tablet) or a laptop device, a multiprocessor system, a game console or controller, a microprocessor-based system, a set-top box, a programmable consumer electronic product, a mobile phone, a mobile computing and/or communication device having a wearable or accessory shape factor (such as a watch, glasses, a headphone, or an earplug), a network PC, a small computer, a mainframe computer, and a distributed computing environment including any of the above systems or devices.

In this embodiment of this application, step 501 may be performed by a server on a cloud side. The server may receive operation data of a user sent by a terminal device, so that the server can obtain the operation data of the user.

For ease of description, forms of execution bodies are not distinguished below, and are described as training devices.

In a model training process, the attribute information may be operation data of the user.

The operation data of the user may be obtained based on a record of interaction between the user and the item (for example, a behavior log of the user). The operation data may include a record of a real operation performed by the user on each item. The operation data may include attribute information of the user, attribute information of each item, and an operation type (for example, click or download) of an operation performed by the user on the plurality of items.

The attribute information of the user may be an attribute related to a preference feature of the user, and is at least one of a gender, an age, an occupation, an income, a hobby, and an education level. The gender may be a male or a female, the age may be a number ranging from 0 to 100, the occupation may be a teacher, a programmer, a chef, or the like, the hobby may be basketball, tennis, running, or the like, and the education level may be a primary school, a middle school, a high school, a university, or the like. A specific type of the attribute information of the user is not limited in this application.

The item may be a physical item or a virtual item, for example, may be an item such as an application (application, app), audio/video, a web page, and news. The attribute information of the item may be at least one of an item name, a developer, an installation package size, a category, and a degree of praise. For example, the item is an application. The category of the item may be a chat category, a running game, an office category, or the like, and the degree of praise may be a score and a comment made on the item, or the like. A specific type of the attribute information of the item is not limited in this application.

In a possible implementation, the training device may obtain operation data of the user, where the operation data includes attribute information of the user and the item, and first operation information of the user for the item in the target recommendation scenario.

In a possible implementation, the target recommendation scenario may be an application that serves a specific requirement, such as Huawei Browser and Huawei Video, or may be a specific channel, such as an entertainment channel, a news channel, or a technology channel in a browser feed.

In a possible implementation, different recommendation scenarios are different applications; different recommendation scenarios are different types of applications (for example, a video application and a browser application are different applications); or different recommendation scenarios are different functions of a same application (for example, different channels of a same application, such as a news channel and a technology channel). The different functions may be classified based on recommendation categories.

502: Obtain a first embedding representation and a second embedding representation respectively by using a first feature extraction network and a second feature extraction network based on the attribute information, where the first embedding representation indicates a feature unrelated to recommendation scenario information, the second embedding representation indicates a feature related to the target recommendation scenario, and the first embedding representation and the second embedding representation are used for fusion to obtain a fused embedding representation.

The following first describes how to obtain the first feature extraction network.

In a possible implementation, the method further includes: predicting second operation information of the user for the item by using a first neural network based on the attribute information; predicting a first recommendation scenario of the operation data by using a second neural network based on the attribute information, where a difference between the first operation information and the second operation information and a difference between the first recommendation scenario and the target recommendation scenario are used to determine a first loss; performing, based on the first loss, orthogonalization processing on a gradient corresponding to a third feature extraction network in the first neural network and a gradient corresponding to a fourth feature extraction network in the second neural network, to obtain a first gradient corresponding to an initial feature extraction network; and updating the third feature extraction network based on the first gradient, to obtain the first feature extraction network.

In a possible implementation, in a process of predicting the second operation information of the user for the item by using the first neural network based on the attribute information, and predicting the first recommendation scenario of the operation data by using the second neural network based on the attribute information, the information indicating the target recommendation scenario is not used as inputs of the third feature extraction network and the fourth feature extraction network.

Because the first operation information is used as a ground truth (ground truth) for training the third feature extraction network, the first operation information does not need to be input into the third feature extraction network in a feedforward process. Because the information indicating the target recommendation scenario is used as a ground truth (ground truth) for training the fourth feature extraction network, the information indicating the target recommendation scenario does not need to be input into the third feature extraction network in the feedforward process.

In a possible implementation, the second operation information may indicate whether the user performs a target operation, and the target operation may be a behavior operation type of the user. On a network platform and in an application, the user usually interacts with an item in various forms (that is, there are a plurality of operation types), for example, an operation type such as browsing, clicking, add-to-cart, or purchasing performed by the user on an e-commerce platform.

In a possible implementation, the second operation information may be a probability that the user performs the target operation on the item.

For example, the second operation information may be a probability whether the user performs clicking, or a probability of performing clicking.

In a possible implementation, the first neural network may include a multilayer perceptron (multilayer perceptron, MLP) and an output layer. The first neural network may output the second operation information of the user for the item, and the second operation information may indicate whether the user performs the target operation on the item.

In a possible implementation, the first recommendation scenario of the operation data may be predicted by using the second neural network. A difference between the first operation information and the second operation information and a difference between the first recommendation scenario and the target recommendation scenario are used to determine a first loss.

In a possible implementation, the first recommendation scenario may be indicated by using one piece of identification information. For example, 1 indicates an application A, and 2 indicates an application B.

In a possible implementation, the second neural network may include a multilayer perceptron (multilayer perceptron, MLP) and an output layer, and the second neural network may output the first recommendation scenario of the operation data.

In a possible implementation, after the second operation information and the first recommendation scenario are obtained through prediction by using the first neural network and the second neural network, a loss function (for example, the first loss in this embodiment of this application) may be constructed separately based on ground truths of the second operation information and the first recommendation scenario. For example, the first loss may be determined based on a difference between the first operation information and the second operation information and a difference between the first recommendation scenario and the target recommendation scenario.

It should be understood that, in addition to being related to the difference between the first operation information and the second operation information and the difference between the first recommendation scenario and the target recommendation scenario, the first loss may further include another loss item. This is not limited herein.

In a possible implementation, orthogonalization processing may be performed, based on the first loss, on a gradient corresponding to the third feature extraction network and a gradient corresponding to the fourth feature extraction network, to obtain a first gradient corresponding to the third feature extraction network.

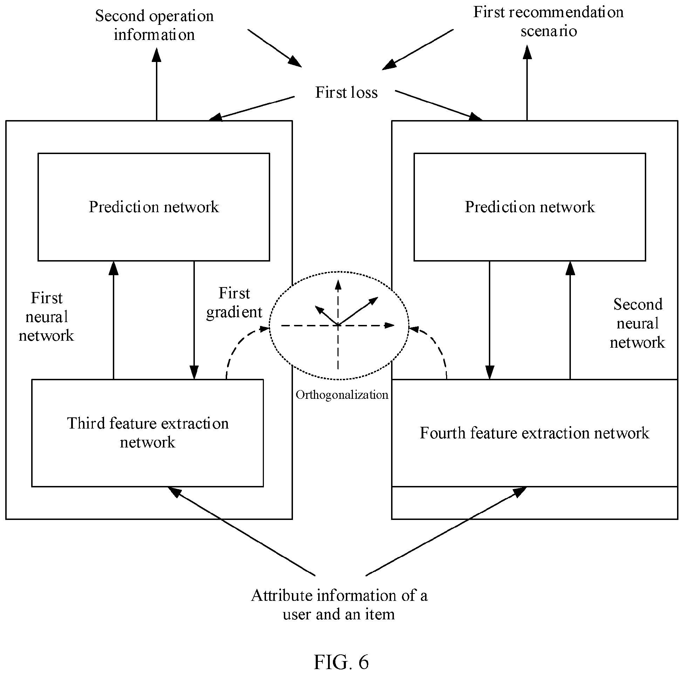

Refer to FIG. 6. An idea of this embodiment of this application is as follows: The third feature extraction network is trained, so that the trained third feature extraction network can identify an invariant feature representation (invariant representation) shared in each scenario. In this embodiment of this application, the second neural network is disposed. Because the second neural network is used to identify a recommendation scenario of operation data, an embedding representation obtained by using the fourth feature extraction network in the second neural network can carry semantic information strongly related to the recommendation scenario, and this part of semantic information strongly related to the recommendation scenario does not need to be carried in the invariant feature representation. Therefore, to enable the third feature extraction network to have a capability of identifying an embedding representation having no semantic information (which may be referred to as a variant representation (scenario representation) in this embodiment of this application) strongly related to the recommendation scenario, in this embodiment of this application, when gradients used to update the third feature extraction network and the fourth feature extraction network are determined, orthogonalization processing is performed on the gradients corresponding to the third feature extraction network and the fourth feature extraction network. Orthogonalization processing can constrain directions of gradients (that is, parameter update directions) corresponding to the third feature extraction network and the fourth feature extraction network to be mutually orthogonal or nearly mutually orthogonal. In this way, embedding representations extracted by the third feature extraction network and the fourth feature extraction network can have different information, and embedding representation separation is implemented. Because the second neural network has a good recommendation scenario distinguishing capability for operation data, the embedding representation extracted by the updated fourth feature extraction network has semantic information strongly related to the recommendation scenario, the first neural network is used to identify operation information, and the trained first neural network has a good capability of estimating an operation behavior of the user. Therefore, the trained third feature extraction network can have a capability of identifying information (that is, boundary of the information) used for operation information identification, and the information does not have the semantic information strongly related to the recommendation scenario. This improves generalization of the recommendation model in each scenario.

In a possible implementation, a neural network may be additionally deployed, to perform orthogonalization processing on the gradient corresponding to the third feature extraction network and the gradient corresponding to the fourth feature extraction network.

In a possible implementation, a constraint term may be added to the first loss, and the constraint term is used to perform orthogonalization constraint on the gradient corresponding to the third feature extraction network and the gradient corresponding to the fourth feature extraction network.

In a possible implementation, after the gradient corresponding to the initial third feature extraction network and the gradient corresponding to the fourth feature extraction network are obtained based on the first loss, orthogonalization processing may be performed on the gradient corresponding to the initial third feature extraction network and the gradient corresponding to the fourth feature extraction network, so that directions of the obtained first gradient and the gradient corresponding to the fourth feature extraction network are orthogonal (or nearly orthogonal).

In a possible implementation, the third feature extraction network may be updated based on the first gradient, to obtain a first feature extraction network.

In this embodiment of this application, to improve generalization of the model, an invariant representation obtained by using the third feature extraction network and a variant representation obtained by using the fourth feature extraction network may be combined (or referred to as fused), so that a combined representation can still have a high estimation capability in a neural network (used to predict operation information).

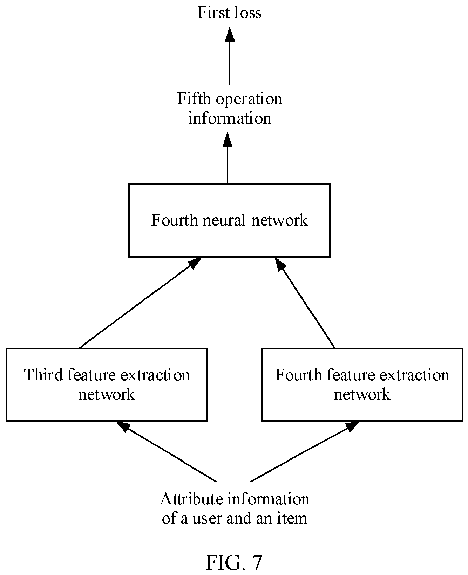

Refer to FIG. 7. In a possible implementation, the invariant representation obtained by using the third feature extraction network and the variant representation obtained by using the fourth feature extraction network may be input into a fourth neural network, to predict fifth operation information of the user for the item. A difference between the fifth operation information and the first operation information is used to determine the first loss. For example, the invariant representation obtained by using the third feature extraction network and the variant representation obtained by using the fourth feature extraction network may be fused (for example, a splicing operation is performed), and a fusion result is input into the fourth neural network. Optionally, the fourth neural network and the first neural network may have a same or similar network structure. For details, refer to the description of the first neural network in the foregoing embodiment. Details are not described herein again.

In a possible implementation, the invariant representation obtained by using the third feature extraction network and the variant representation obtained by using the fourth feature extraction network may be input into the fourth neural network, to obtain the fifth operation information of the user for the item, and the first loss is constructed based on the difference between the fifth operation information and the first operation information (that is, the ground truth). In other words, the first loss may further include the difference between the fifth operation information and the first operation information in addition to a loss item of the difference between the first operation information and the second operation information and a loss item of the difference between the first recommendation scenario and the target recommendation scenario.

In this application, the first feature extraction network is used to extract a feature unrelated to the recommendation scenario information, that is, an invariant feature representation (invariant representation) of each scenario, and the feature and a feature related to the recommendation scenario information (which may be referred to as a variant representation (scenario representation) in this embodiment of this application) are fused, to indicate that each scenario has a user-specific behavior feature, or indicate a user-specific behavior feature between different scenarios. This improves prediction precision of subsequent operation information prediction.

503: Predict target operation information of the user for the item based on the fused embedding representation.

In a possible implementation, a difference between the target operation information and the first operation information is used to determine a second loss; and the method further includes: updating the first feature extraction network based on the second loss.

In a possible implementation, in an actual model inference process, the trained third feature extraction network needs to be connected to a scenario-related operation information prediction network, and each scenario corresponds to a scenario-related operation information prediction network. During inference, to predict operation information of a user for an item in a recommendation scenario (a recommendation scenario A), in one aspect, attribute information of the user and the item is input to the trained third feature extraction network to obtain an embedding representation (for example, the first embedding representation). In another aspect, the attribute information of the user and the item is input to a feature extraction network related to the recommendation scenario A (or the attribute information is input to a feature extraction network related to each scenario, and then output information is weighted based on a weight of the scenario), to obtain an embedding representation (for example, the second embedding representation). The first embedding representation and the second embedding representation may be fused and input to an operation information prediction network corresponding to the recommendation scenario A, to obtain predicted operation information (for example, the target operation information).

Therefore, in a training process, for update of the third feature extraction network, in addition to a gradient (for example, the first gradient) obtained based on back propagation of an output of the first neural network, a gradient (for example, the second gradient) obtained based on back propagation of an output (for example, the target operation information) of an operation information prediction network corresponding to each scenario further needs to be used for update.

However, the gradient is a gradient (for example, the second gradient) related to a specific scenario. There is negative impact between the gradient (for example, the second gradient) and a gradient (for example, the first gradient) obtained based on the invariant representation (parameter update directions of the two gradients may conflict with each other, for example, a gradient A and a gradient B are gradients in opposite directions, and if the gradient A and the gradient B are directly superimposed for update, it is equivalent to that no parameter update is performed). As a result, effective information between the two gradients cannot be well used to improve effect of the corresponding scenario.

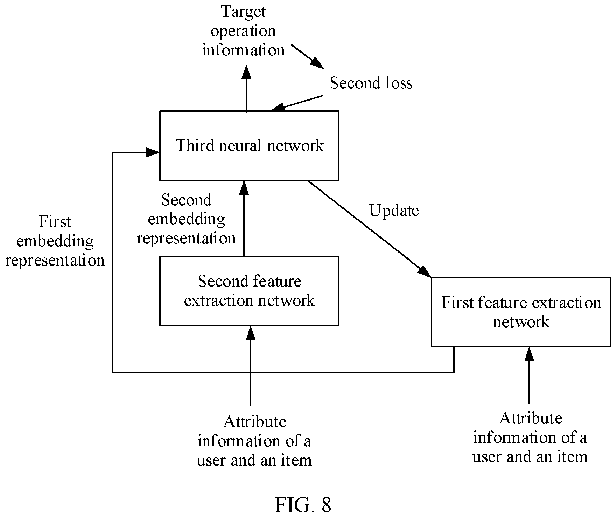

In this embodiment of this application, refer to FIG. 8. To resolve the foregoing problem, the third feature extraction network is first updated based on the gradient obtained based on the invariant representation. Then, the attribute information of the user and the item is processed based on a feature extraction network (for example, the second feature extraction network) related to the recommendation scenario (or the attribute information is input to a feature extraction network related to each scenario, and then output information is weighted based on a weight of the scenario), to obtain an embedding representation (for example, the second embedding representation). In addition, the attribute information of the user and the item is processed based on the updated third feature network, to obtain the embedding representation (for example, the first embedding representation). The first embedding representation and the second embedding representation may be fused and input into an operation information prediction network corresponding to the recommendation scenario A, to obtain predicted operation information (for example, the target operation information), a loss (for example, the second loss) is obtained based on the target operation information, a gradient (for example, the second gradient) is determined based on the second loss, and the first feature extraction network is updated based on the second gradient.

In the foregoing manner, in this application, the third feature extraction is not updated after the gradient obtained based on the invariant representation is combined with the gradient obtained based on the scenario-related operation information, but the first feature extraction network is updated based on the gradient obtained based on the scenario-related operation information after the third feature extraction network is updated based on the gradient obtained based on the invariant representation (the first feature extraction network is obtained). In this way, there is no negative impact between the gradient related to the specific scenario and the gradient obtained based on the invariant representation, and effective information between the two gradients can be well used to improve effect of the corresponding scenario.

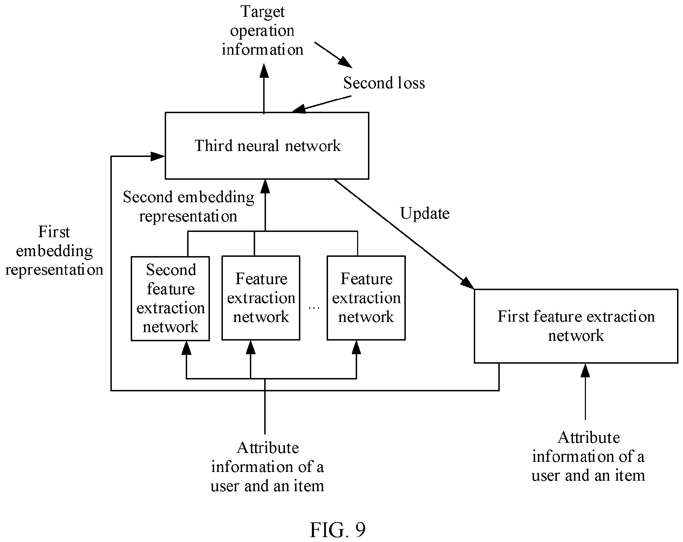

In a possible implementation, refer to FIG. 9. The obtaining a first embedding representation and a second embedding representation respectively by using a first feature extraction network and a second feature extraction network based on the attribute information includes: obtaining the second embedding representation by using the second feature extraction network based on the attribute information; and the obtaining the second embedding representation by using the second feature extraction network based on the attribute information includes: obtaining a plurality of embedding representations based on the attribute information by using a plurality of feature extraction networks including the second feature extraction network, where each feature extraction network corresponds to one recommendation scenario, and the second feature extraction network corresponds to the target recommendation scenario; and fusing the plurality of embedding representations to obtain the second embedding representation.

In a possible implementation, the fusing the plurality of embedding representations includes: predicting, based on the attribute information, a probability value that the attribute information corresponds to each recommendation scenario; and fusing the plurality of embedding representations by using each probability value as a weight of a corresponding recommendation scenario.

That is, a corresponding feature extraction network may be disposed for each recommendation scenario. In a feedforward process, attribute information is input to each feature extraction network, each feature extraction network may output one embedding representation, and a plurality of embedding representation output by a plurality of feature extraction networks may be fused. In the fusion manner, a weight (or referred to as a probability value) corresponding to each recommendation scenario may be determined based on the attribute information, and the plurality of embedding representations are fused based on the probability value, to obtain the second embedding representation. In a possible implementation, a probability value that the attribute information corresponds to each recommendation scenario may be obtained based on the attribute information; and a plurality of embedding representations are fused by using each probability value as a weight of a corresponding recommendation scenario, to obtain the second embedding representation. For example, weighted summation may be performed.

In a possible implementation, the fourth neural network may be used to obtain a probability value that the attribute information corresponds to each recommendation scenario. The fourth neural network may reuse the second neural network, and use a probability that is output and that is for each recommendation scenario as a weight of a plurality of embedding representations. Alternatively, the fourth neural network having a recommendation scenario prediction capability may be retrained in an end-to-end manner, to implement efficient fusion of a plurality of pieces of scenario information.

The foregoing describes how to obtain the second embedding representation by using the second feature extraction network based on the attribute information. The second embedding representation is a scenario-related embedding representation, and a feedforward process further needs to be performed by using the first feature extraction network. Specifically, the first embedding representation may be obtained by using the first feature extraction network based on the attribute information. Further, the first embedding representation and the second embedding representation may be fused (for example, a fusion manner such as matrix multiplication may be performed), to obtain a fused embedding representation. Further, the target operation information of the user for the item in the target recommendation scenario may be predicted based on the fused embedding representation.

It should be understood that, in the foregoing weighted fusion manner of the embedding representations obtained by using the plurality of feature extraction networks, the second embedding representation obtained through fusion can have more corresponding recommendation scenario information and less non-corresponding recommendation scenario information. However, because the attribute information (excluding the information indicating the target recommendation scenario) is input into the plurality of feature extraction networks, the embedding representation output by the plurality of feature extraction networks does not have accurate semantic information of the corresponding recommendation scenario. Therefore, in a process of training the plurality of feature extraction networks, both information indicating a recommendation scenario and attribute information may be additionally input into the feature extraction network, to participate in a feedforward process of network training.

In a possible implementation, the operation data includes information indicating the target recommendation scenario; and the method further includes: obtaining a third embedding representation by using the second feature extraction network based on the operation data; predicting third operation information of the user for the item by using a third neural network based on the third embedding representation, where a difference between the third operation information and the first operation information is used to determine a fourth loss; and updating the third neural network and the second feature extraction network based on the fourth loss.

In a possible implementation, during each iteration, the model may be updated based on a gradient obtained based on data of one batch (batch). The data of a same batch may include operation data in different recommendation scenarios. For example, operation data in the second recommendation scenario may be included. A loss (for example, the third loss in this embodiment of this application) and a gradient used to update the first feature extraction network may alternatively be obtained based on the operation data in the second recommendation scenario. However, the gradient obtained based on the second loss and the gradient obtained based on the third loss are gradients obtained in different recommendation scenarios, and there may be negative impact between the two gradients (parameter update directions of the two gradients may conflict with each other, for example, a gradient A and a gradient B are gradients in opposite directions, and if the gradient A and the gradient B are directly superimposed for update, it is equivalent to that no parameter update is performed). Therefore, effective information between the two gradients cannot be well used to improve effect of the corresponding scenario.

To resolve the foregoing problem, in this embodiment of this application, orthogonalization processing is performed on the gradient obtained based on the second loss and the gradient obtained based on the third loss, to reduce mutual negative impact between gradients obtained in different recommendation scenarios.

In a possible implementation, the operation data (including the attribute information) of the user in the second recommendation scenario may be obtained; and the operation information of the user for the item in the second recommendation scenario is predicted based on the operation data in the second recommendation scenario (for example, the attribute information of the operation data of the user in the second recommendation scenario may be input into a feature extraction network corresponding to the second recommendation scenario, to obtain an embedding representation; for details, refer to the description of the second feature extraction network in the foregoing embodiment; and the embedding representation may be input to a neural network (used to predict the operation information in the second recommendation scenario) corresponding to the second recommendation scenario, to obtain a corresponding prediction result). The prediction result and a ground truth of the operation information of the operation data in the second recommendation scenario may be used to determine the third loss. The gradient (a third gradient) corresponding to the first feature extraction network may be obtained during back propagation of the third loss.

In a possible implementation, orthogonalization processing may be performed, based on the second loss and the third loss, on a plurality of gradients corresponding to the first feature extraction network, to obtain a plurality of third gradients corresponding to the first feature extraction network, where one of the plurality of third gradients is obtained based on the second loss, and one of the plurality of third gradients is obtained based on the third loss; the plurality of third gradients are fused (for example, fused in a vector summation manner) to obtain a second gradient corresponding to the first feature extraction network; and the first feature extraction network is updated based on the second gradient.

In a possible implementation, in a model inference process, when the target operation information meets a preset condition, it is determined to recommend the item to the user.

In the foregoing manner, a probability that the user performs an operation on the item may be obtained, and information recommendation is performed based on the probability. Specifically, when the recommendation information meets a preset condition, it may be determined to recommend the item to the user.

During information recommendation, the recommendation information may be recommended to the user in a form of a list page, to expect the user to perform a behavior action.

The following describes beneficial effect of embodiments of this application with reference to an experiment result.

This embodiment of this application is verified on a public commercial dataset and a private company dataset, and data statistics information is as follows:

### Table 1 Dataset information statistics

| Dataset | Ali-CCP | | | Industrial | | | | |
|---|---|---|---|---|---|---|---|---|
| Scenario | #1 | #2 | #3 | #1 | #2 | #3 | #4 | #5 |
| Percentage | 61.46% | 37.79% | 0.75% | 33.60% | 14.08% | 12.74% | 6.79% | 32.79% |
| CTR | 3.81% | 4.00% | 4.38% | 1.10% | 1.55% | 4.57% | 1.64% | 4.08% |

The offline evaluation indicator is AUC, and the online evaluation indicators are CTR and ECPM.

Compared with the existing baseline, the offline experiment result is as follows:

## Table 2 Overall effect on the public dataset

|  | Single | | Mix | | Shared Bottom | | PLE | | Finetune | | STAR | | CausalInt | |
|---|---|---|---|---|---|---|---|---|---|---|---|---|---|---|
| Scenarios | AUC | RelImp | AUC | RelImp | AUC | RelImp | AUC | RelImp | AUC | RelImp | AUC | RelImp | AUC | RelImp |
| #1 | 0.6060 | - | 0.6036 | −0.41% | 0.6100 | 0.65% | 0.6099 | 0.63% | 0.6091 | 0.50% | 0.6134 | 1.21% | 0.6179* | 1.96% |
| #2 | 0.6136 | - | 0.6083 | −0.87% | 0.6149 | 0.21% | 0.6160 | 0.39% | 0.6146 | 0.16% | 0.6176 | 0.65% | 0.6231* | 1.55% |
| #3 | 0.5702 | - | 0.5838 | 2.38% | 0.5716 | 0.24% | 0.5720 | 0.32% | 0.5731 | 0.50% | 0.5817 | 2.01% | 0.5996* | 5.16% |

## Table 3 Overall effect on the private company dataset

|  | Single | | Mix | | Shared Bottom | | PLE | | Finetune | | STAR | | CausalInt | |
|---|---|---|---|---|---|---|---|---|---|---|---|---|---|---|
| Scenarios | AUC | RelImp | AUC | RelImp | AUC | RelImp | AUC | RelImp | AUC | RelImp | AUC | RelImp | AUC | RelImp |
| #1 | 0.7474 | - | 0.7496 | 0.29% | 0.7462 | −0.16% | 0.7495 | 0.28% | 0.7510 | 0.48% | 0.7502 | 0.38% | 0.7511* | 0.50% |
| #2 | 0.7853 | - | 0.7904 | 0.65% | 0.7876 | 0.30% | 0.7916 | 0.80% | 0.7904 | 0.65% | 0.7925 | 0.91% | 0.7930* | 0.98% |
| #3 | 0.7029 | - | 0.7084 | 0.79% | 0.7054 | 0.37% | 0.7103 | 1.06% | 0.7097 | 0.98% | 0.7074 | 0.65% | 0.7115* | 1.22% |
| #4 | 0.7073 | - | 0.7387 | 4.44% | 0.7318 | 3.46% | 0.7368 | 4.17% | 0.7382 | 4.37% | 0.7369 | 4.18% | 0.7387* | 4.44% |
| #5 | 0.6816 | - | 0.6887 | 1.04% | 0.6835 | 0.28% | 0.6882 | 0.97% | 0.6896 | 1.18% | 0.6885 | 1.01% | 0.6896* | 1.18% |

It can be seen that this solution outperforms the baseline model on both public and company datasets (including a single-scenario modeling solution, a heuristic solution, a multi-task solution, and an existing multi-scenario modeling solution).

The three parts of this solution can be used independently or together. Table 4 shows incremental effect of the modules in this solution.

## Table 4 Incremental superimposition effect of different modules

| Scenarios | Shared Bottom | | +Do(Invar) | | +Do(De-Neg) | | +Do(Trans) | |
|---|---|---|---|---|---|---|---|---|
|  | AUC | RelImp | AUC | RelImp | AUC | RelImp | AUC | RelImp |
| #1 | 0.6149 | - | 0.6195 | 0.74% | 0.6219 | 1.13% | 0.6231 | 1.33% |
| #2 | 0.6100 | - | 0.6148 | 0.80% | 0.6159 | 0.98% | 0.6179 | 1.30% |
| #3 | 0.5716 | - | 0.5933 | 3.80% | 0.5987 | 4.75% | 0.5996 | 4.91% |

It can be seen that, based on the simplest framework model Shared Bottom, three modules are added gradually. The model effect is increased gradually, that is, improvement of the model is greater than that of the baseline model.

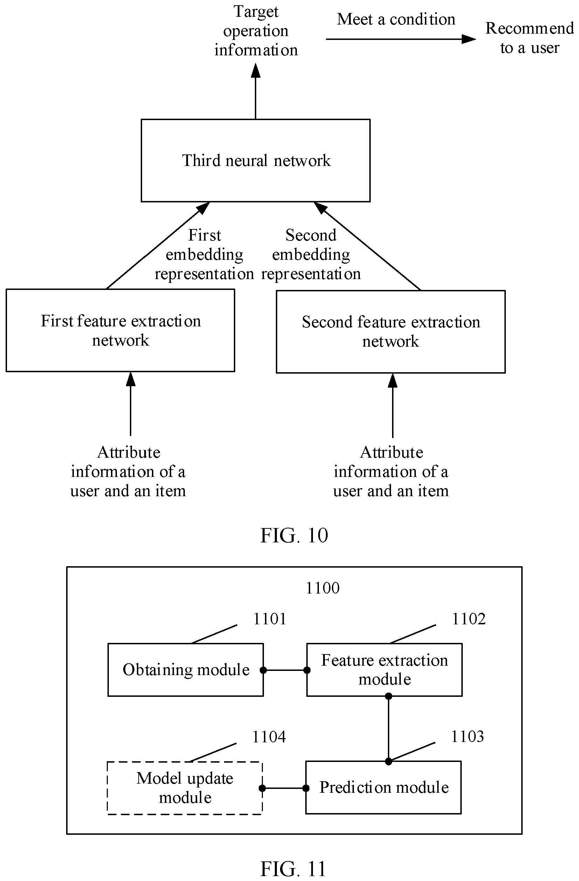

The following describes, from a perspective of an apparatus, an operation prediction apparatus provided in an embodiment of this application. FIG. 11 is a diagram of a structure of an operation prediction apparatus according to an embodiment of this application. As shown in FIG. 11, an operation prediction apparatus 1100 provided in this embodiment of this application includes:

an obtaining module 1101, configured to obtain attribute information of a user and an item in a target recommendation scenario.

For detailed description of the obtaining module 1101, refer to the description in step 501 in the foregoing embodiment. Details are not described herein again.

A feature extraction module 1102 is configured to obtain a first embedding representation and a second embedding representation respectively by using a first feature extraction network and a second feature extraction network based on the attribute information, where the first embedding representation indicates a feature unrelated to recommendation scenario information, the second embedding representation indicates a feature related to the target recommendation scenario, and the first embedding representation and the second embedding representation are used for fusion to obtain a fused embedding representation.

For detailed description of the feature extraction module 1102, refer to the description of step 502 in the foregoing embodiment. Details are not described herein again.

A prediction module 1103 is configured to predict target operation information of the user for the item based on the fused embedding representation.

For detailed description of the prediction module 1103, refer to the description in step 503 and the description in step 504 in the foregoing embodiment. Details are not described herein again.

In a possible implementation, the attribute information includes operation data of the user in the target recommendation scenario, and the operation data further includes first operation information of the user for the item; the prediction module is further configured to:

predict second operation information of the user for the item by using a first neural network based on the attribute information; and

predict a first recommendation scenario of the operation data by using a second neural network based on the attribute information, where a difference between the first operation information and the second operation information and a difference between the first recommendation scenario and the target recommendation scenario are used to determine a first loss; and

the apparatus further includes:

a model update module 1104, further configured to: perform, based on the first loss, orthogonalization processing on a gradient corresponding to a third feature extraction network in the first neural network and a gradient corresponding to a fourth feature extraction network in the second neural network, to obtain a first gradient corresponding to an initial feature extraction network; and

update the third feature extraction network based on the first gradient, to obtain the first feature extraction network.

In a possible implementation, a difference between the target operation information and the first operation information is used to determine a second loss; and the model update module 1104 is further configured to:

update the first feature extraction network based on the second loss.

In a possible implementation, the feature extraction module is specifically configured to obtain the second embedding representation by using the second feature extraction network based on the attribute information; and

the obtaining the second embedding representation by using the second feature extraction network based on the attribute information includes:

obtaining a plurality of embedding representations based on the attribute information by using a plurality of feature extraction networks including the second feature extraction network, where each feature extraction network corresponds to one recommendation scenario, and the second feature extraction network corresponds to the target recommendation scenario; and

fusing the plurality of embedding representations to obtain the second embedding representation.

In a possible implementation, the feature extraction module is specifically configured to: predict, based on the attribute information, a probability value that the attribute information corresponds to each recommendation scenario; and fuse the plurality of embedding representations by using each probability value as a weight of a corresponding recommendation scenario.

In a possible implementation, the obtaining module is further configured to:

obtain operation data of the user in a second recommendation scenario;

the prediction module is further configured to: predict operation information of the user for the item in the second recommendation scenario based on the operation data in the second recommendation scenario, where the operation information of the user for the item in the second recommendation scenario is used to determine a third loss; and

the model update module 1104 is specifically configured to: perform, based on the second loss and the third loss, orthogonalization processing on a plurality of gradients corresponding to the first feature extraction network, to obtain a plurality of third gradients corresponding to the first feature extraction network;

fuse the plurality of fourth gradients to obtain a second gradient corresponding to the first feature extraction network; and

update the first feature extraction network based on the second gradient.

In a possible implementation, the operation data includes information indicating the target recommendation scenario; and the feature extraction module is further configured to: obtain a third embedding representation by using the second feature extraction network based on the operation data; and

predict third operation information of the user for the item by using a third neural network based on the third embedding representation, where a difference between the third operation information and the first operation information is used to determine a fourth loss; and

the model update module 1104 is further configured to update the third neural network and the second feature extraction network based on the fourth loss.

In a possible implementation, the target operation information indicates whether the user performs a target operation on the item, and the target operation includes at least one of the following:
a click operation, a browse operation, an add-to-cart operation, and a purchase operation.
In a possible implementation, the attribute information includes a user attribute of the user, and the user attribute includes at least one of the following: a gender, an age, an occupation, an income, a hobby, and an education level.
In a possible implementation, the attribute information includes an item attribute of the item, and the item attribute includes at least one of the following: an item name, a developer, an installation package size, a category, and a degree of praise.
In a possible implementation, different recommendation scenarios are different applications;

different recommendation scenarios are different types of applications; or
different recommendation scenarios are different functions of a same application.

In a possible implementation, the apparatus further includes:
a recommendation module, configured to: when the target operation information meets a preset condition, determine to recommend the item to the user.
An embodiment of this application further provides a model training apparatus. The apparatus includes:

an obtaining module, configured to obtain operation data of a user in a target recommendation scenario, where the operation data includes attribute information of the user and an item, and first operation information of the user for the item;
a prediction module, configured to: predict second operation information of the user for the item by using a first neural network based on the attribute information;
predict a first recommendation scenario of the operation data by using a second neural network based on the attribute information, where a difference between the first operation information and the second operation information and a difference between the first recommendation scenario and the target recommendation scenario are used to determine a first loss; and
perform, based on the first loss, orthogonalization processing on a gradient corresponding to a third feature extraction network in the first neural network and a gradient corresponding to a fourth feature extraction network in the second neural network, to obtain a first gradient corresponding to an initial feature extraction network; and
a model update module, configured to update the third feature extraction network based on the first gradient, to obtain a first feature extraction network.

In a possible implementation, the apparatus further includes:
a feature extraction module, configured to obtain a first embedding representation and a second embedding representation respectively by using the first feature extraction network and a second feature extraction network based on the attribute information, where the first embedding representation and the second embedding representation are used for fusion to obtain a fused embedding representation.
The prediction module is further configured to predict target operation information of the user for the item based on the fused embedding representation, where a difference between the target operation information and the first operation information is used to determine a second loss; and
the model update module is further configured to update the first feature extraction network based on the second loss.
In a possible implementation, the obtaining a first embedding representation and a second embedding representation respectively by using the first feature extraction network and a second feature extraction network based on the attribute information includes:

obtaining the second embedding representation by using the second feature extraction network based on the attribute information; and
the obtaining the second embedding representation by using the second feature extraction network based on the attribute information includes:

obtaining a plurality of embedding representations based on the attribute information by using a plurality of feature extraction networks including the second feature extraction network, where each feature extraction network corresponds to one recommendation scenario, and the second feature extraction network corresponds to the target recommendation scenario; and

fusing the plurality of embedding representations to obtain the second embedding representation.

In a possible implementation, the obtaining module is further configured to:

obtain operation data of the user in a second recommendation scenario;
the prediction module is further configured to: predict operation information of the user for the item in the second recommendation scenario based on the operation data in the second recommendation scenario, where the operation information of the user for the item in the second recommendation scenario is used to determine a third loss; and
the model update module is specifically configured to: perform, based on the second loss and the third loss, orthogonalization processing on a plurality of gradients corresponding to the first feature extraction network, to obtain a plurality of third gradients corresponding to the first feature extraction network;
fuse the plurality of fourth gradients to obtain a second gradient corresponding to the first feature extraction network; and
update the first feature extraction network based on the second gradient.

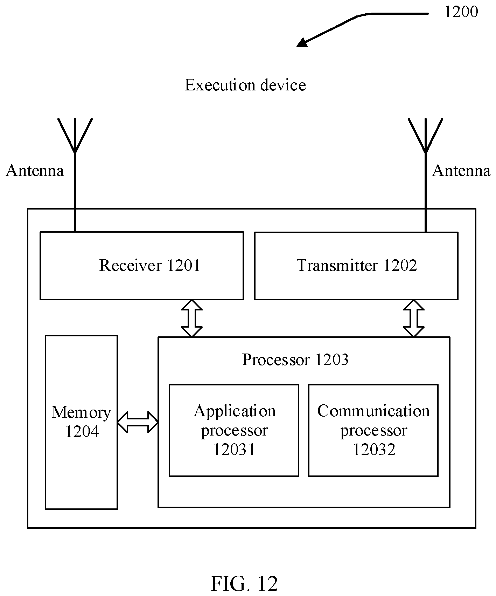

The following describes an execution device provided in an embodiment of this application. FIG. 12 is a diagram of a structure of an execution device according to an embodiment of this application. An execution device 1200 may be specifically a mobile phone, a tablet, a laptop computer, a smart wearable device, a server, and the like. This is not limited herein. The execution device 1200 implements functions of the operation prediction method in the embodiment corresponding to FIG. 5. Specifically, the execution device 1200 includes a receiver 1201, a transmitter 1202, a processor 1203 (there may be one or more processors 1203 in the execution device 1200), and a memory 1204. The processor 1203 may include an application processor 12031 and a communication processor 12032. In some embodiments of this application, the receiver 1201, the transmitter 1202, the processor 1203, and the memory 1204 may be connected through a bus or in another manner.

The memory 1204 may include a read-only memory and a random access memory, and provide instructions and data to the processor 1203. Apart of the memory 1204 may further include a non-volatile random access memory (non-volatile random access memory, NVRAM). The memory 1204 stores a processor and operation instructions, an executable module, or a data structure; or a subset thereof; or an extended set thereof. The operation instructions may include various operation instructions used to implement various operations.

The processor 1203 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are referred to as the bus system.

The method disclosed in embodiments of this application may be applied to the processor 1203, or may be implemented by the processor 1203. The processor 1203 may be an integrated circuit chip with a signal processing capability. During implementation, the steps of the foregoing method may be completed by using a hardware integrated logic circuit in the processor 1203 or instructions in the form of software. The processor 1203 described above may be a general-purpose processor, a digital signal processor (digital signal processing, DSP), a microprocessor or microcontroller, and a vision processing unit (vision processing unit, VPU), a tensor processing unit (tensor processing unit, TPU), and another processor suitable for AI computing, and may further include an application-specific integrated circuit (application specific integrated circuit, ASIC), a field-programmable gate array (field-programmable gate array, FPGA) or another programmable logic device, a discrete gate or transistor logic device, or a discrete hardware component. The processor 1203 may implement or perform the methods, the steps, and the logical block diagrams disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1204, and the processor 1203 reads information in the memory 1204 and completes the steps 501 to 503 in the foregoing embodiments in combination with hardware of the processor 1203.

The receiver 1201 may be configured to receive input digit or character information, and generate a signal input related to related setting and function control of the execution device. The transmitter 1202 may be configured to output digital or character information through a first interface. The transmitter 1202 may be further configured to send instructions to a disk group through the first interface, to modify data in the disk group. The transmitter 1202 may further include a display device such as a display.

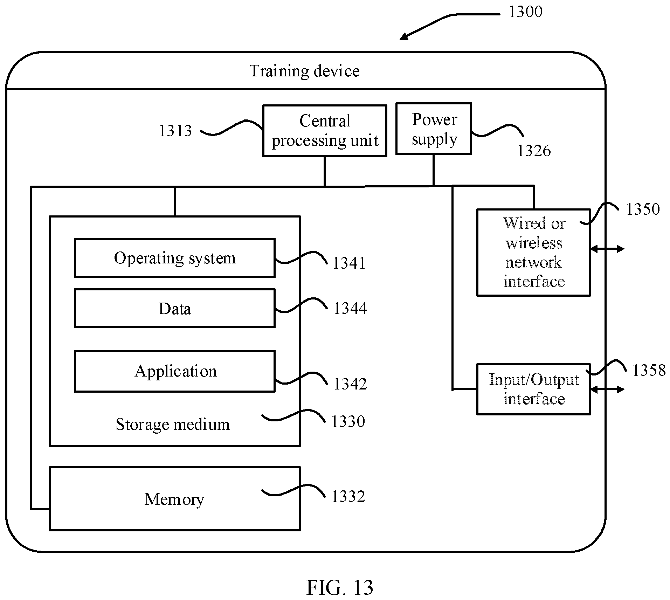

An embodiment of this application further provides a training device. FIG. 13 is a diagram of a structure of a training device according to an embodiment of this application. Specifically, a training device 1300 is implemented by one or more servers. The training device 1300 may differ greatly due to different configurations or performance, and may include one or more central processing units (central processing units, CPUs) 1313 (for example, one or more processors) and a memory 1332, one or more storage media 1330 (for example, one or more massive storage devices) that store an application 1342 or data 1344. The memory 1332 and the storage medium 1330 may be transient storage or persistent storage. A program stored in the storage medium 1330 may include one or more modules (not shown in the figure), and each module may include a series of instruction operations for the training device. Further, the central processing unit 1313 may be configured to communicate with the storage medium 1330, and perform, on the training device 1300, the series of instruction operations in the storage medium 1330.

The training device 1300 may further include one or more power supplies 1326, one or more wired or wireless network interfaces 1350, one or more input/output interfaces 1358, or one or more operating systems 1341, such as Windows ServerTM, Mac OS XTM, UnixTM, LinuxTM, and FreeBSDTM.

Specifically, the training device may perform the steps 501 to 503 in the foregoing embodiment.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal, and when the program runs on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

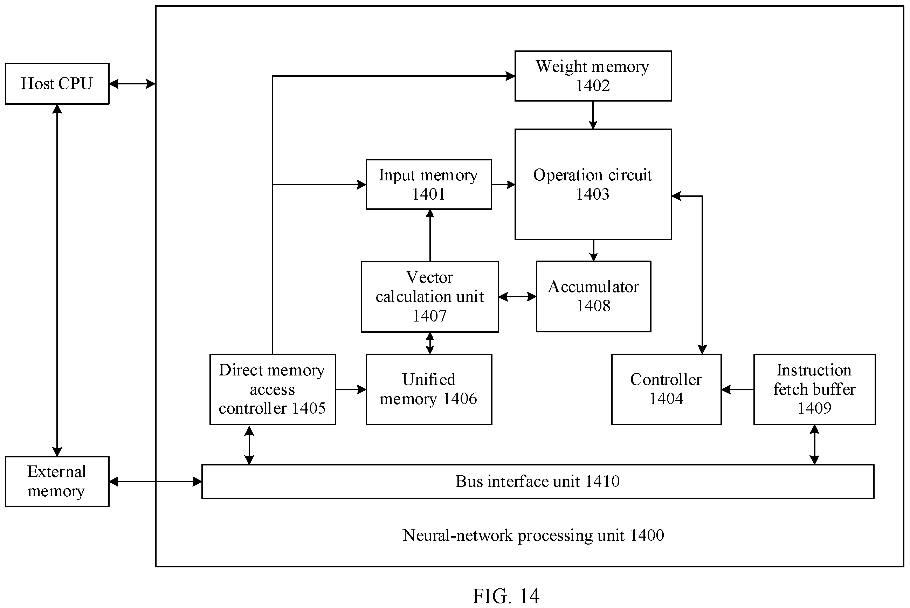

For details, refer to FIG. 14. FIG. 14 is a diagram of a structure of a chip according to an embodiment of this application. The chip may be represented as a neural-network processing unit NPU 1400. The NPU 1400 is mounted to a host CPU (Host CPU) as a coprocessor, and the host CPU allocates a task. A core part of the NPU is an operation circuit 1403. The operation circuit 1403 is controlled by a controller 1404 to extract matrix data in a memory and perform a multiplication operation.

The NPU 1400 may implement, through cooperation between internal components, the operation prediction method provided in the embodiment described in FIG. 5.

More specifically, in some implementations, the operation circuit 1403 in the NPU 1400 includes a plurality of processing units (Process Engine, PE) inside. In some implementations, the operation circuit 1403 is a two-dimensional systolic array. The operation circuit 1403 may alternatively be a one-dimensional systolic array or another electronic circuit capable of performing mathematical operations such as multiplication and addition. In some implementations, the operation circuit 1403 is a general-purpose matrix processor.

For example, it is assumed that there is an input matrix A, a weight matrix B, and an output matrix C. The operation circuit fetches data corresponding to the matrix B from a weight memory 1402, and buffers the data on each PE in the operation circuit. The operation circuit obtains data of the matrix A from the input memory 1401 to perform a matrix operation on the matrix B, and stores an obtained partial result or an obtained final result of the matrix into an accumulator (accumulator) 1408.

A unified memory 1406 is configured to store input data and output data. Weight data is directly transferred to the weight memory 1402 by using a direct memory access controller DMAC (Direct Memory Access Controller, DMAC) 1405. The input data is also transferred to the unified memory 1406 by using the DMAC.

A BIU is a bus interface unit, namely, a bus interface unit 1410, and is configured to perform interaction between an AXI bus and each of the DMAC and an instruction fetch buffer (Instruction Fetch Buffer, IFB) 1409.

The bus interface unit (Bus Interface Unit, BIU for short) 1410 is used by the instruction fetch buffer 1409 to obtain instructions from an external memory, and is further used by the direct memory access controller 1405 to obtain original data of the input matrix A or the weight matrix B from the external memory.

The DMAC is mainly configured to transfer input data in the external memory DDR to the unified memory 1406, transfer weight data to the weight memory 1402, or transfer input data to the input memory 1401.

A vector calculation unit 1407 includes a plurality of operation processing units. If required, further processing is performed on an output of the operation circuit 1403, such as vector multiplication, vector addition, an exponential operation, a logarithmic operation, or value comparison. The vector calculation unit 1407 is mainly used for the non-convolutional or fully connected layer network calculation in a neural network, such as batch normalization (batch normalization), pixel-level summation, and upsampling of a feature map.

In some implementations, the vector calculation unit 1407 can store a processed output vector in the unified memory 1406. For example, the vector calculation unit 1407 may apply a linear function or a nonlinear function to the output of the operation circuit 1403, for example, perform linear interpolation on a feature map extracted from a convolutional layer, and for another example, obtain a vector of an accumulated value to generate an activation value. In some implementations, the vector calculation unit 1407 generates a normalized value, a pixel-level summation value, or both. In some implementations, the processed output vector can be used as an activated input to the operation circuit 1403, for example, the processed output vector can be used at a subsequent layer of the neural network.

The instruction fetch buffer (instruction fetch buffer) 1409 connected to the controller 1404 is configured to store instructions used by the controller 1404.

The unified memory 1406, the input memory 1401, the weight memory 1402, and the instruction fetch buffer 1409 are all on-chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Disk, SSD)), or the like.

**Claims**

**1.** An operation prediction method, wherein the method comprises:

obtaining attribute information of a user and an item in a target recommendation scenario;
obtaining a first embedding representation and a second embedding representation respectively by using a first feature extraction network and a second feature extraction network based on the attribute information, wherein the first embedding representation indicates a feature unrelated to recommendation scenario information, the second embedding representation indicates a feature related to the target recommendation scenario, and the first embedding representation and the second embedding representation are used for fusion to obtain a fused embedding representation; and

predicting target operation information of the user for the item based on the fused embedding representation.

2. The method according to claim 1, wherein the attribute information comprises operation data of the user in the target recommendation scenario, and the operation data further comprises first operation information of the user for the item; and

the method further comprises:

predicting second operation information of the user for the item by using a first neural network based on the attribute information;

predicting a first recommendation scenario of the operation data by using a second neural network based on the attribute information, wherein a difference between the first operation information and the second operation information and a difference between the first recommendation scenario and the target recommendation scenario are used to determine a first loss;

performing, based on the first loss, orthogonalization processing on a gradient corresponding to a third feature extraction network in the first neural network and a gradient corresponding to a fourth feature extraction network in the second neural network, to obtain a first gradient corresponding to the initial feature extraction network; and

updating the third feature extraction network based on the first gradient, to obtain the first feature extraction network.

3. The method according to claim 1 or 2, wherein a difference between the target operation information and the first operation information is used to determine a second loss; and the method further comprises:

updating the first feature extraction network based on the second loss.

4. The method according to claim 3, wherein the obtaining a first embedding representation and a second embedding representation respectively by using a first feature extraction network and a second feature extraction network based on the attribute information comprises:

obtaining the second embedding representation by using the second feature extraction network based on the attribute information; and

the obtaining the second embedding representation by using the second feature extraction network based on the attribute information comprises:

obtaining a plurality of embedding representations based on the attribute information by using a plurality of feature extraction networks comprising the second feature extraction network, wherein each feature extraction network corresponds to one recommendation scenario, and the second feature extraction network corresponds to the target recommendation scenario; and

fusing the plurality of embedding representations to obtain the second embedding representation.

5. The method according to claim 4, wherein the fusing the plurality of embedding representations comprises:

predicting, based on the attribute information, a probability value that the attribute information corresponds to each recommendation scenario; and

fusing the plurality of embedding representations by using each probability value as a weight of a corresponding recommendation scenario.

6. The method according to any one of claims 3 to 5, wherein the method further comprises:

obtaining operation data of the user in a second recommendation scenario; and

predicting operation information of the user for the item in the second recommendation scenario based on the operation data in the second recommendation scenario, wherein the operation information of the user for the item in the second recommendation scenario is used to determine a third loss; and

the updating the first feature extraction network based on the second loss comprises:

performing, based on the second loss and the third loss, orthogonalization processing on a plurality of gradients corresponding to the first feature extraction network, to obtain a plurality of third gradients corresponding to the first feature extraction network;

fusing the plurality of fourth gradients to obtain a second gradient corresponding to the first feature extraction network; and

updating the first feature extraction network based on the second gradient.

7. The method according to any one of claims 3 to 6, wherein the operation data comprises information indicating the target recommendation scenario; and the method further comprises:

obtaining a third embedding representation by using the second feature extraction network based on the operation data;

predicting third operation information of the user for the item by using the third neural network based on the third embedding representation, wherein a difference between the third operation information and the first operation information is used to determine a fourth loss; and

updating the third neural network and the second feature extraction network based on the fourth loss.

8. The method according to any one of claims 1 to 7, wherein the target operation information indicates whether the user performs a target operation on the item, and the target operation comprises at least one of the following:
a click operation, a browse operation, an add-to-cart operation, and a purchase operation.

9. The method according to any one of claims 1 to 8, wherein the attribute information comprises a user attribute of the user, and the user attribute comprises at least one of the following: a gender, an age, an occupation, an income, a hobby, and an education level.

10. The method according to any one of claims 1 to 9, wherein the attribute information comprises an item attribute of the item, and the item attribute comprises at least one of the following: an item name, a developer, an installation package size, a category, and a degree of praise.

11. The method according to any one of claims 1 to 10, wherein

different recommendation scenarios are different applications;
different recommendation scenarios are different types of applications; or
different recommendation scenarios are different functions of a same application.

12. The method according to any one of claims 1 to 11, wherein the method further comprises:
when the target operation information meets a preset condition, determining to recommend the item to the user.

13. A model training method, wherein the method comprises:

obtaining operation data of a user in a target recommendation scenario, wherein the operation data comprises attribute information of the user and an item, and first operation information of the user for the item;

predicting second operation information of the user for the item by using a first neural network based on the attribute information;

predicting a first recommendation scenario of the operation data by using a second neural network based on the attribute information, wherein a difference between the first operation information and the second operation information and a difference between the first recommendation scenario and the target recommendation scenario are used to determine a first loss;

performing, based on the first loss, orthogonalization processing on a gradient corresponding to a third feature extraction network in the first neural network and a gradient corresponding to a fourth feature extraction network in the second neural network, to obtain a first gradient corresponding to the initial feature extraction network; and

updating the third feature extraction network based on the first gradient, to obtain a first feature extraction network.

14. The method according to claim 13, wherein the method further comprises:

obtaining a first embedding representation and a second embedding representation respectively by using the first feature extraction network and a second feature extraction network based on the attribute information, wherein the first embedding representation and the second embedding representation are used for fusion to obtain a fused embedding representation;

predicting target operation information of the user for the item based on the fused embedding representation, wherein a difference between the target operation information and the first operation information is used to determine a second loss; and

updating the first feature extraction network based on the second loss.

15. The method according to claim 13 or 14, wherein the obtaining a first embedding representation and a second embedding representation respectively by using the first feature extraction network and a second feature extraction network based on the attribute information comprises:

obtaining the second embedding representation by using the second feature extraction network based on the attribute information; and

the obtaining the second embedding representation by using the second feature extraction network based on the attribute information comprises:

obtaining a plurality of embedding representations based on the attribute information by using a plurality of feature extraction networks comprising the second feature extraction network, wherein each feature extraction network corresponds to one recommendation scenario, and the second feature extraction network corresponds to the target recommendation scenario; and

fusing the plurality of embedding representations to obtain the second embedding representation.

16. The method according to claim 14 or 15, wherein the method further comprises:

obtaining operation data of the user in a second recommendation scenario; and

predicting operation information of the user for the item in the second recommendation scenario based on the operation data in the second recommendation scenario, wherein the operation information of the user for the item in the second recommendation scenario is used to determine a third loss; and

the updating the first feature extraction network based on the second loss comprises:

performing, based on the second loss and the third loss, orthogonalization processing on a plurality of gradients corresponding to the first feature extraction network, to obtain a plurality of third gradients corresponding to the first feature extraction network;

fusing the plurality of fourth gradients to obtain a second gradient corresponding to the first feature extraction network; and

updating the first feature extraction network based on the second gradient.

17. An operation prediction apparatus, wherein the apparatus comprises:

an obtaining module, configured to obtain attribute information of a user and an item in a target recommendation scenario;

a feature extraction module, configured to obtain a first embedding representation and a second embedding representation respectively by using a first feature extraction network and a second feature extraction network based on the attribute information, wherein the first embedding representation indicates a feature unrelated to recommendation scenario information, the second embedding representation indicates a feature related to the target recommendation scenario, and the first embedding representation and the second embedding representation are used for fusion to obtain a fused embedding representation; and

a prediction module, configured to predict target operation information of the user for the item based on the fused embedding representation.

18. The apparatus according to claim 17, wherein the attribute information comprises operation data of the user in the target recommendation scenario, and the operation data further comprises first operation information of the user for the item;

the prediction module is further configured to:

predict second operation information of the user for the item by using a first neural network based on the attribute information; and

predict a first recommendation scenario of the operation data by using a second neural network based on the attribute information, wherein a difference between the first operation information and the second operation information and a difference between the first recommendation scenario and the target recommendation scenario are used to determine a first loss; and
the apparatus further comprises:

> a model update module, further configured to: perform, based on the first loss, orthogonalization processing on a gradient corresponding to a third feature extraction network in the first neural network and a gradient corresponding to a fourth feature extraction network in the second neural network, to obtain a first gradient corresponding to the initial feature extraction network; and
> update the third feature extraction network based on the first gradient, to obtain the first feature extraction network.

19. The apparatus according to claim 17 or 18, wherein a difference between the target operation information and the first operation information is used to determine a second loss; and the model update module is further configured to: update the first feature extraction network based on the second loss.

20. The apparatus according to claim 19, wherein the feature extraction module is specifically configured to obtain the second embedding representation by using the second feature extraction network based on the attribute information; and
the obtaining the second embedding representation by using the second feature extraction network based on the attribute information comprises:

> obtaining a plurality of embedding representations based on the attribute information by using a plurality of feature extraction networks comprising the second feature extraction network, wherein each feature extraction network corresponds to one recommendation scenario, and the second feature extraction network corresponds to the target recommendation scenario; and
> fusing the plurality of embedding representations to obtain the second embedding representation.

21. The apparatus according to claim 20, wherein the feature extraction module is specifically configured to: predict, based on the attribute information, a probability value that the attribute information corresponds to each recommendation scenario; and
fuse the plurality of embedding representations by using each probability value as a weight of a corresponding recommendation scenario.

22. The apparatus according to any one of claims 19 to 21, wherein the obtaining module is further configured to:

> obtain operation data of the user in a second recommendation scenario;
> the prediction module is further configured to: predict operation information of the user for the item in the second recommendation scenario based on the operation data in the second recommendation scenario, wherein the operation information of the user for the item in the second recommendation scenario is used to determine a third loss; and
> the model update module is specifically configured to: perform, based on the second loss and the third loss, orthogonalization processing on a plurality of gradients corresponding to the first feature extraction network, to obtain a plurality of third gradients corresponding to the first feature extraction network;
> fuse the plurality of fourth gradients to obtain a second gradient corresponding to the first feature extraction network; and
> update the first feature extraction network based on the second gradient.

23. The apparatus according to any one of claims 19 to 22, wherein the operation data comprises information indicating the target recommendation scenario; and the feature extraction module is further configured to: obtain a third embedding representation by using the second feature extraction network based on the operation data; and

> predict third operation information of the user for the item by using the third neural network based on the third embedding representation, wherein a difference between the third operation information and the first operation information is used to determine a fourth loss; and
> the model update module is further configured to update the third neural network and the second feature extraction network based on the fourth loss.

24. The apparatus according to any one of claims 17 to 23, wherein the target operation information indicates whether the user performs a target operation on the item, and the target operation comprises at least one of the following:

a click operation, a browse operation, an add-to-cart operation, and a purchase operation.

25. The apparatus according to any one of claims 17 to 24, wherein the attribute information comprises a user attribute of the user, and the user attribute comprises at least one of the following: a gender, an age, an occupation, an income, a hobby, and an education level.

26. The apparatus according to any one of claims 17 to 25, wherein the attribute information comprises an item attribute of the item, and the item attribute comprises at least one of the following: an item name, a developer, an installation package size, a category, and a degree of praise.

27. The apparatus according to any one of claims 17 to 26, wherein

    different recommendation scenarios are different applications;
    different recommendation scenarios are different types of applications; or
    different recommendation scenarios are different functions of a same application.

28. The apparatus according to any one of claims 17 to 27, wherein the apparatus further comprises:
    when the target operation information meets a preset condition, determining to recommend the item to the user.

29. A computing device, wherein the computing device comprises a memory and a processor, the memory stores code, and the processor is configured to obtain the code and perform the method according to any one of claims 1 to 16.

30. A computer storage medium, wherein the computer storage medium stores one or more instructions, and when the instructions are executed by one or more computers, the one or more computers are enabled to perform the method according to any one of claims 1 to 16.

31. A computer program product, comprising code, wherein when the code is executed, the method according to any one of claims 1 to 16 is implemented.

Intelligent information chain

Intelligent product and industry application

| Translation/ Text analysis/... | Voice/Vision/Image/... |

Data

Data processing: | Data training/Machine learning/ Deep learning | Searching/ Inference/ Decision making | ... |

Infrastructure | Sensor | Intelligent chip | Basic platform | ... |

IT value chain

FIG. 1

FIG. 2

FIG. 3

FIG. 4

Obtain attribute information of a user and an item in a target recommendation scenario ⟋ 501

Obtain a first embedding representation and a second embedding representation respectively by using a first feature extraction network and a second feature extraction network based on the attribute information, where the first embedding representation indicates a feature unrelated to recommendation scenario information, the second embedding representation indicates a feature related to the target recommendation scenario, and the first embedding representation and the second embedding representation are used for fusion to obtain a fused embedding representation ⟋ 502

Predict target operation information of the user for the item based on the fused embedding representation ⟋ 503

FIG. 5

Second operation
information

First recommendation
scenario

First loss

First neural network

Prediction network

First gradient

Orthogonalization

Third feature extraction network

Second neural network

Prediction network

Fourth feature extraction network

Attribute information of a
user and an item

FIG. 6

First loss

Fifth operation
information

Fourth neural network

Third feature extraction
network

Fourth feature extraction
network

Attribute information
of a user and an item

FIG. 7

Target
operation
information

Second loss

Third neural network

First
embedding
representation

Second
embedding
representation

Update

Second feature
extraction network

First feature extraction
network

Attribute
information of a
user and an item

Attribute
information of a
user and an item

FIG. 8

Target
operation
information

Second loss

Third neural network

Second embedding
representation

First
embedding
representation

Update

Second
feature
extraction
network

Feature
extraction
network

...

Feature
extraction
network

First feature extraction
network

Attribute
information of a
user and an item

Attribute
information of a
user and an item

FIG. 9

Target operation information

Meet a condition → Recommend to a user

Third neural network

First embedding representation    Second embedding representation

First feature extraction network

Second feature extraction network

Attribute information of a user and an item

Attribute information of a user and an item

**FIG. 10**

1100

1101    Obtaining module

1102    Feature extraction module

1104    Model update module

1103    Prediction module

**FIG. 11**

1200

Execution device

Antenna

Antenna

| Receiver 1201 | Transmitter 1202 |
|---|---|

Processor 1203

| Memory 1204 | Application processor 12031 | Communication processor 12032 |
|---|---|---|

FIG. 12

1300

Training device

1313 — Central processing unit

Power supply — 1326

Wired or wireless network interface — 1350

Operating system — 1341

Data — 1344

Application — 1342

Storage medium — 1330

Input/Output interface — 1358

Memory — 1332

FIG. 13

FIG. 14

## INTERNATIONAL SEARCH REPORT

| International application No. |
|---|
| **PCT/CN2023/103227** |

**A. CLASSIFICATION OF SUBJECT MATTER**

G06F11/34(2006.01)i; G06N3/04(2023.01)i; G06N3/08(2023.01)i; G06N20/00(2019.01)i

According to International Patent Classification (IPC) or to both national classification and IPC

**B. FIELDS SEARCHED**

Minimum documentation searched (classification system followed by classification symbols)

IPC: G06F G06N

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 推荐, 点击, 下载, 查看, 预测, 场景, 特征, 拼接, 融合, 梯度, 正交化, 概率, recommend, download, forecast, scene, characteristic, feature, fusion, grads, orthogonalization

**C. DOCUMENTS CONSIDERED TO BE RELEVANT**

| Category* | Citation of document, with indication, where appropriate, of the relevant passages | Relevant to claim No. |
|---|---|---|
| PX | CN 115237732 A (HUAWEI TECHNOLOGIES CO., LTD.) 25 October 2022 (2022-10-25) claims 1-31, and description, paragraphs [0214]-[0374] | 1-31 |
| PX | WANG, Yichao et al. "CausalInt: Causal Inspired Intervention for Multi-Scenario Recommendation" *KDD'22: Proceedings of the 28th ACM SIGKDD Conference on Knowledge Discovery and Data Mining,* 14 August 2022 (2022-08-14), pp. 4090-4099 | 1-31 |
| X | CN 113688313 A (BEIJING SANKUAI ONLINE TECHNOLOGY CO., LTD.) 23 November 2021 (2021-11-23) description, paragraphs [0060]-[0146] | 1, 8-12, 17, 24-31 |
| A | CN 113688313 A (BEIJING SANKUAI ONLINE TECHNOLOGY CO., LTD.) 23 November 2021 (2021-11-23) description, paragraphs [0060]-[0146] | 2-7, 13-16, 18-23 |
| X | CN 113672807 A (HANGZHOU NETEASE CLOUD MUSIC TECHNOLOGY CO., LTD.) 19 November 2021 (2021-11-19) description, paragraphs [0069]-[0156] | 1, 8-12, 17, 24-31 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 August 2023** | **03 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/103227** |

**C.    DOCUMENTS CONSIDERED TO BE RELEVANT**

| Category* | Citation of document, with indication, where appropriate, of the relevant passages | Relevant to claim No. |
|---|---|---|
| A | CN 113672807 A (HANGZHOU NETEASE CLOUD MUSIC TECHNOLOGY CO., LTD.) 19 November 2021 (2021-11-19)<br>description, paragraphs [0069]-[0156] | 2-7, 13-16, 18-23 |
| A | CN 113641894 A (BEIJING SANKUAI ONLINE TECHNOLOGY CO., LTD.) 12 November 2021 (2021-11-12)<br>entire document | 1-31 |
| A | CN 114528323 A (BESTPAY CO., LTD.) 24 May 2022 (2022-05-24)<br>entire document | 1-31 |

Form PCT/ISA/210 (second sheet) (July 2022)

**INTERNATIONAL SEARCH REPORT**
Information on patent family members

International application No.

**PCT/CN2023/103227**

| Patent document cited in search report | | | Publication date (day/month/year) | Patent family member(s) | Publication date (day/month/year) |
|---|---|---|---|---|---|
| CN | 115237732 | A | 25 October 2022 | None | |
| CN | 113688313 | A | 23 November 2021 | None | |
| CN | 113672807 | A | 19 November 2021 | None | |
| CN | 113641894 | A | 12 November 2021 | None | |
| CN | 114528323 | A | 24 May 2022 | None | |

Form PCT/ISA/210 (patent family annex) (July 2022)

**EP 4 538 894 A1**

**Patent documents cited in the description**

- CN 202210759871